# EUROPEAN PATENT SPECIFICATION

(11) **EP 0 993 600 B1**
(45) Date of publication and mention of the grant of the patent: **31.03.2004**
(21) Application number: 98933154.1
(22) Date of filing: 02.07.1998
(51) Int. Cl.: G01N 15/12

(54) **METHOD AND APPARATUS FOR SENSING AND CHARACTERIZING PARTICLES**
VERFAHREN UND VORRICHTUNG ZUR BESTIMMUNG UND CHARAKTERISIERUNG VON TEILCHEN
PROCEDE ET APPAREIL SERVANT A DETECTER ET A CARACTERISER DES PARTICULES

(30) Priority: 03.07.1997 US 887588; 01.07.1998 US 108997
(43) Date of publication of application: 19.04.2000
(73) Proprietor: Coulter International Corp., Miami, Florida 33196 (US)
(72) Inventor: GRAHAM, Marshall, Donnie, Nicholasville, KY 40356 (US); DUNSTAN, Harvey, J., Herts. SG4 8DU (GB); GRAHAM, Gerry, Nicholasville, KY 40356 (US); BRITTON, Ted, Sunrise, FL 33322 (US); HARFIELD, John, Geoffrey, Bedfordshire LU5 6NT (GB); KING, James, S., Parkland, FL 33067 (US)
(74) Representative: Müller-Boré & Partner Patentanwälte
(86) International application number: PCT/US1998/013911
(87) International publication number: WO 1999/001743

(56) References cited:
- DE-A- 3 329 160
- DE-C- 19 601 054
- US-A- 4 420 720
- US-A- 4 438 390
- US-A- 4 484 134
- US-A- 4 906 936

## Description

### BACKGROUND OF THE INVENTION

### Field of the Invention:

The present invention relates to improvements in methods and apparatus for sensing and characterizing small particles, such as blood cells or ceramic powders, suspended in a liquid medium having an electrical impedance per unit volume which differs from that of the particles. More particularly, it relates to improvements in methods and apparatus for sensing and characterizing such particles by the Coulter principle.

### Discussion of the Prior Art:

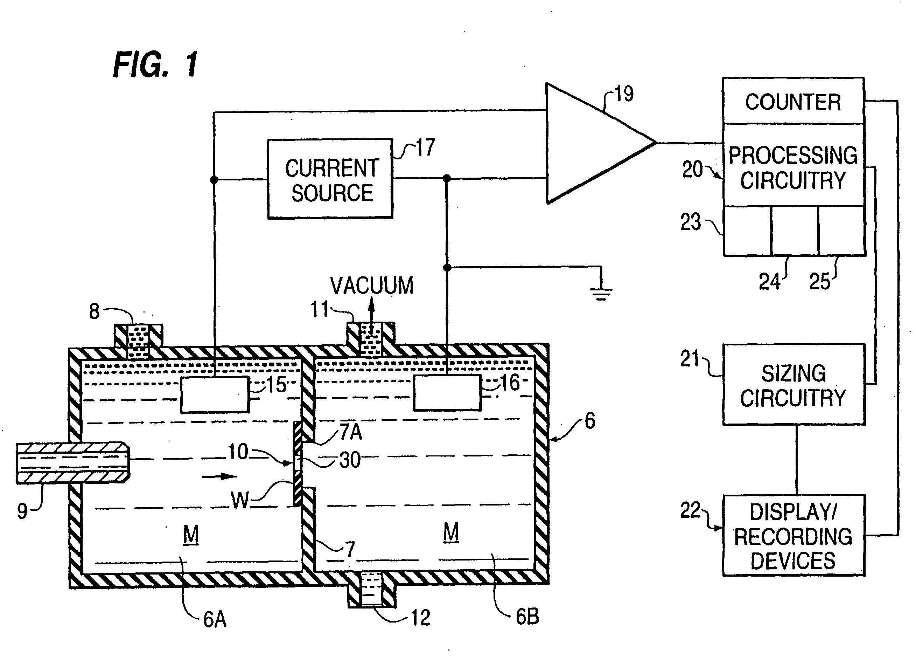

U.S. Patent No. 2,658,508 to Wallace H. Coulter discloses a seminal method for sensing particles suspended in a liquid medium. An exemplary apparatus for implementing such method is schematically illustrated in FIG. 1. Such apparatus comprises a dual-compartment dielectric vessel **6** which defines first and second compartments **6A** and **6B** separated by a dielectric wall **7**. Each of the compartments **6A** and **6B** is adapted to contain, and is filled with, a liquid medium **M.** The particles to be sensed and characterized are suspended at an appropriate concentration in liquid medium **M** and introduced into compartment **6A** through a suitable inlet port **8** formed therein. Wall **7** is provided with a relatively large opening **7A** which is sealed by a thin wafer **W** made of a homogeneous dielectric material. A small through-hole formed in wafer **W** provides a conduit **10,** which constitutes the only operative connection between compartments **6A** and **6B**. An appropriate vacuum applied to an outlet port **11** suitably formed in compartment **6B** causes the particle suspension to flow from compartment **6A** to compartment **6B** through conduit **10,** discussed in detail below. Each particle in the suspension displaces its own volume of the particle-suspending liquid **M,** and conduit **10** provides a consistent reference volume against which that displaced volume may be compared. If the dimensions of conduit **10** and the concentration of particles in the suspension are appropriately selected, particles can be made to transit the conduit more or less individually. Conduit **10** thus functions as a miniature volumeter, capable under suitable conditions of making sensible the liquid displaced by individual microscopic particles.

To enable convenient sensing of the liquid displacement occasioned by particles transiting the conduit, the particle-suspending liquid **M** is made to have an electrical impedance per unit volume which differs from that of the particles. The contrast in electrical impedance between particle and suspending liquid thus converts the volume of displaced liquid into a proportional change in the electrical impedance of the liquid column filling conduit **10**. Excitation electrodes **15** and **16** are respectively positioned in compartments **6A** and **6B** and electrically connected to a source **17** of electrical current, whereby a nominal electrical current is caused to flow through conduit **10** simultaneously with the particle suspension. Consequently, passage of a particle through conduit **10** produces a pulsation in the current flowing through the conduit which is proportional to the volume of liquid displaced by the particle. An AC-coupled sensing circuit **19,** also electrically connected to excitation electrodes **15** and **16,** operates to sense the pulsations in current between these electrodes. Thus, as individual particles pass through conduit **10,** sensing circuit **19** produces an electrical signal pulse having an amplitude which is characteristic of the particle volume. Additional circuits **20** further process the particle signal pulses to provide a count of particles exceeding some particular volumetric threshold or, via the positive-displacement metering system disclosed in U.S. Patent No. 2,869,078 to Wallace H. Coulter and Joseph R. Coulter, Jr., the particle concentration. The volumetric distribution of the particles may be conveniently characterized by causing current source **17** to provide a constant current and analyzing the particle pulses with multiple-thresholding sizing circuitry **21** as described in U.S. Patent No. 3,259,842 to Wallace H. Coulter et al. Alternatively, if current source **17** is caused to provide combinations of excitation currents, including at least one source of high-frequency alternating current as discussed in U.S. Patents Nos. 3,502,973 and 3,502,974 to Wallace H. Coulter and W. R. Hogg, an apparent volume reflecting the internal composition of certain particles may be similarly characterized. Such characterization results are displayed or recorded by appropriate devices **22.** This method of sensing and characterizing particles, by suspending them in a liquid medium having an electrical impedance per unit volume which differs from that of the particles and passing the resulting particle suspension through a constricting conduit while monitoring the electrical current flow through the conduit, has become known as the Coulter principle.

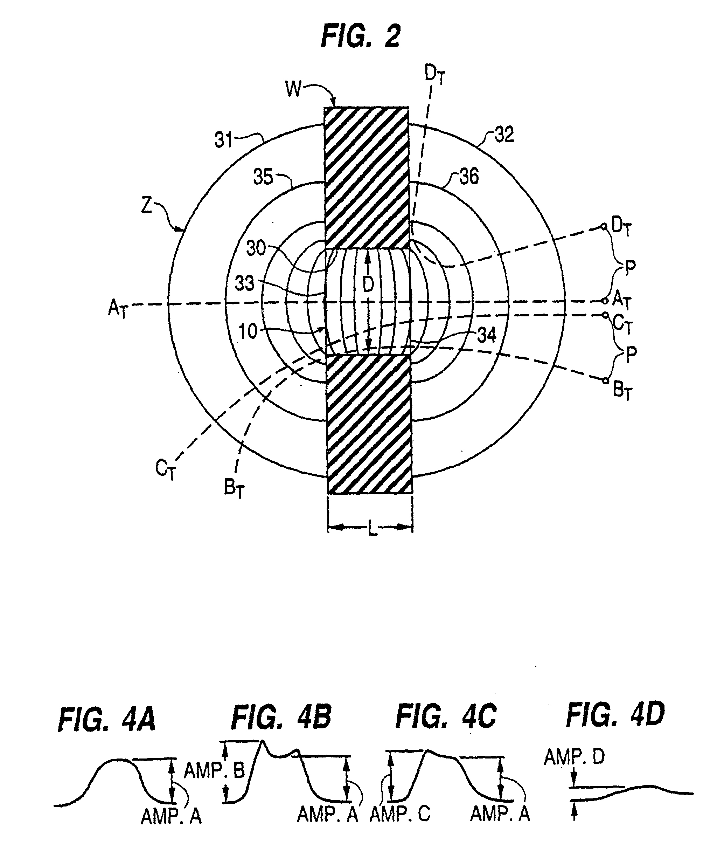

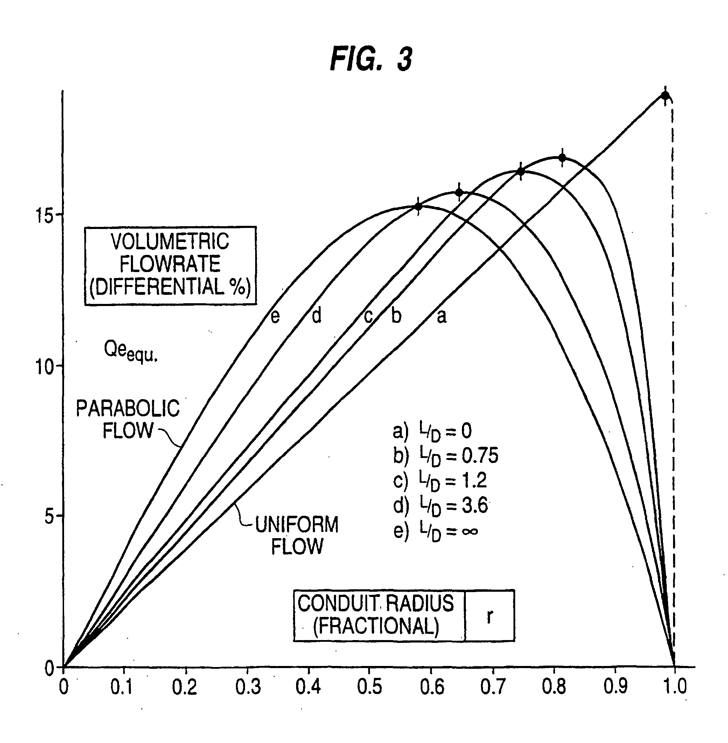

Central to the Coulter principle is the volumeter conduit **10** which enables electrical sensing of particle characteristics by constricting both the electric and hydrodynamic fields established in vessel **6**. Although conduits of general longitudinal section and either circular or rectangular cross-sections are considered in the '508 patent, in this patent's practical example the conduit is a pinpoint circular aperture formed in the wall of a closed glass tube disposed within a second vessel so that both particle suspension and excitation current flow in the direction of the aperture axis between the two vessels. Such small apertures formed directly in a containment vessel are difficult to manufacture to repeatable geometry and tolerance. A practicable alternative utilized separate wafers cut from capillary tubing and sealed over a somewhat larger opening so that the tubing conduit formed the only operative connection between the two vessels; however, the conduit geometry in such wafers was unstable if sealing were done by the glass-fusion methods required for reliable seals. Ruby or sapphire jewels developed as anti-friction bearings for precision mechanical devices retain their geometry during fusion to glass, have excellent dielectric and mechanical properties, are readily available in a range of geometries and sizes, and so were indicated for use as conduit wafers in U.S. Patent Nos. 2,985,830 and 3,122,431 to Wallace H. Coulter et al. The aperture tube described in these patents has been widely adapted, e.g., vessel **6** in FIG. 1, and ruby or sapphire ring jewels are frequently used as the conduit wafer **W** constricting the opening (e.g., **7A** in wall **7**) between containment compartments. As shown in the enlarged view of conduit wafer **W** in FIG. 2, a traditional Coulter volumeter conduit **10** thus comprises a continuous surface or wall **30** of length L which defines a right cylindrical opening of circular cross-section and diameter D through a homogeneous dielectric material of thickness L. Due to material homogeneity, the electrical resistivity of conduit wall **30** surrounding the flows of suspension and current through the conduit is substantially axisymmetric and uniform in any longitudinal conduit section. Because of its historical development, conduit wafer **W** is often called an "aperture wafer", and the traditional Coulter conduit **10** in conduit wafer **W** is commonly referred to as a "Coulter aperture".

The '508 patent describes two important functional properties as depending on the dimensions of Coulter volumeter conduits such as **10** in FIG. 1, viz., the volumetric sensitivity and the masking of one particle by another during simultaneous passage through the conduit volume. In principle, maximum volumetric sensitivity is obtained when the dimensions of volumeter conduit **10** approximate the diameter of the largest particle in the suspension of interest. Practically, conduit diameter **D** must approach twice the maximum particle diameter to minimize risk of clogging, and conduit length L is usually made as short as possible to minimize coincidence artifacts due to two or more particles simultaneously transiting the conduit. For a given conduit geometry, coincidence effects are only dependent on particle concentration and can be limited by increasing sample dilution. Industrial applications require various conduit diameters D between 0.010 mm and 2.000 mm, but many medical and scientific applications can be satisfied with conduit diameters D between 0.030 mm and 0.200 mm. Conduits with length-to-diameter ratio L/D = 1.2 have been found to provide a combination of characteristics useful in a variety of applications, but medical applications benefit from the faster sample-throughput rates obtainable with less-diluted samples. As noted in the aforementioned U.S. Patent No. 2,985,830, conduits with L/D = 0.75 have proven a practicable compromise; such conduits permit acceptable processing rates and volumetric sizing of particles having diameters from about two percent, up to about 80 percent, of the conduit diameter D. In many applications decreased coincidence volumes or improved volumetric sensitivity would be advantageous, but field properties in the vicinity of the volumeter conduit frustrate use of shorter conduit lengths.

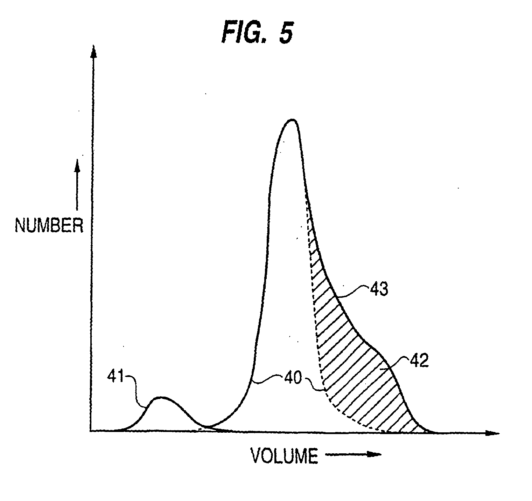

The '508 patent does not anticipate the complicating field properties of volumeter conduits such as **10** in FIG. 1. Since issuance of the '508 patent in 1953, the Coulter principle has been applied to a variety of particle-characterization problems important in numerous medical, scientific and industrial disciplines, and much experience has been gained with Coulter volumeter conduits. Many studies have been published regarding their functional properties, e.g., Volker Kachel, "Electrical Resistance Pulse Sizing: Coulter Sizing", to which reference is recommended for additional information (*FLOW CYTOMETRY AND SORTING,* 2nd. ed., M. R. Melamed, T. Lindmo, and M. L. Mendelsohn, eds., Wiley-Liss, New York, 1990, pages 45 to 80). Characteristics of signal pulses generated by particles passing through such conduits result from a complex interaction of the particles with both the electric field established in the liquid medium **M** by the current between excitation electrodes **15** and **16** and the hydrodynamic field established by the suspending liquid **M** carrying the particles through the conduit. Potential distributions for both fields show axisymmetric, semi-elliptical equipotentials at the entry orifice of the conduit, and for both fields, concentric flow converges toward this orifice. While the current through conduit **10** produces an electric field which is symmetric about the conduit midpoint as shown in FIG. 2, kinematic viscosity of the particle-suspending liquid causes a more complicated suspension flow through conduit **10** into compartment **6B**. Some field properties of volumeter conduits relevant to the present invention may be summarized as follows:
1. As shown in the longitudinal section of conduit wafer **W** in FIG. 2, the particle-sensitive zone **Z** functionally includes not only the geometric volumeter conduit **10** defined by wall **30** but also the two semielliptical ambit electric fields **31** and **32** coaxial with, and outside the opposing ends of, the geometric conduit; the scale of these ambit fields depends only on the diameter D of the respective entrance and exit orifices, **33** and **34.** In addition to producing current pulsations as they transit the geometric conduit, particles may also produce current pulsations if they pass through that portion of the suspending liquid **M** containing the ambit fields. Consequently, the semielliptical equipotentials corresponding to the desired detectability threshold determine the effective spatial extent of the ambit fields **31** and **32.** It can be shown that the portion of the particle-sensitive zone occupied by the geometric conduit 10 is (L/D)/(L/D + 16K/3), where K is the product of the three diameter-normalized intercepts of the chosen threshold equipotential on a coordinate system with origins at the particular orifice center. It has been demonstrated that the effective ambit fields extend outward from the respective entrance and exit orifices **33** and **34** of volumeter conduit **10** approximately one conduit diameter D, with lateral intercepts at 1.15D, if pulse amplitudes from peripheral passages are to be limited to one percent of the theoretical maximum signal-pulse amplitude. For these one-percent equipotentials **35** and **36,** the axial length of sensitive zone **Z** is (L + 2D), K = 1.3225, and for L/D = 1.2 more than 85 percent of the particle-sensitive zone is external to the geometric Coulter conduit **10.** The spatial extent of the sensitive zone increases the likelihood of particle coincidence, requiring greater sample dilution and processing times. In addition, the spatial extent of sensitive zone **Z** limits pulse signal-to-noise ratios, and therefore particle detectability, in two ways. First, particle contrasts and so pulse amplitudes are limited, since the volumetric sensitivity depends on the ratio of liquid volume displaced by each particle to the volume of liquid in the sensitive zone; and secondly, the noise tending to mask particle contrasts is increased, since it originates thermally throughout this latter volume. In principle, shorter conduit lengths L can decrease particle coincidence, increase conduit volumetric sensitivity, and decrease thermal noise; in practice, the benefits of decreasing conduit length are limited because, as L approaches zero, sensitive zone **Z** collapses to the ambit ellipsoid with volume determined by the conduit diameter and the desired threshold of pulse detectability.
2. The electric field forming that portion of particle-sensitive zone **Z** within the geometric volumeter conduit **10** is inhomogeneous, only approaching homogeneity at the conduit midpoint for L/D ratios of 2.0 or greater. Midpoint field inhomogeneity introduces errors of two types into particle pulses, viz., particles transiting the conduit along axial trajectories fail to generate fully-developed pulse amplitudes for conduits with L/D ratios less than 2.5, and particles with similar contrasts generate pulse amplitudes depending on the radial position of the particle trajectory, regardless of the L/D ratio of the conduit. Further, as will be discussed in Item 4, particles transiting the annular region containing the intense gradients at orifices **33** and **34** generate pulses having anomalous characteristics. This region, from conduit wall **30** inward to a radius r = 0.75(D/2) for typical Coulter volumeter conduits, also defines the maximum particle diameter for which linear volumetric response is obtained.
3. Conduit hydrodynamics determine particle presentation to particle-sensitive zone **Z** and, therefore, characteristics of the pulse generated by a given particle as it transits the geometric volumeter conduit. In response to the driving pressure gradient, the particle suspension in the sample compartment (**6A** in FIG. 1) develops concentric laminar flow accelerating toward volumeter conduit **10.** At the entry orifice **33** in FIG. 2, the velocity profile of the constricting flow is quasi-uniform and of a magnitude determined by the desired sample volume, the time allowed to process it, and the cross-sectional area of the conduit. The flow just inside the conduit includes a shear layer at conduit wall **30,** and particularly for L/D ratios less than about 3.0, the flow profile depends on the edge sharpness of entry orifice **33** and on how closely the kinematic viscosity of the suspending liquid permits it to follow the orifice geometry. When curvature of the edge at orifice **33** is sufficiently gradual, viscosity causes a transition from a quasi-uniform velocity profile toward the parabolic velocity profile of laminar flow (for practical reasons, orifice edges are usually sharp, and the shear layer surrounding the developing laminar flow may thicken to appreciably constrict the apparent flow cross-section). As is known in the fluidic art, for a circular conduit having a given L/D ratio, the degree of laminarity ξ in a developing profile is inversely proportional to the Reynold's number 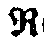 e, i.e., ξ ∝ x/(R 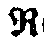 e), where x is the distance into the conduit from the entry orifice and R = D/2. Standard fluidic methods permit calculation of the differential volumetric flowrates through given annular cross-sections of conduit **10** centered on any particular radius. The results of such calculations for a typical suspending liquid **M** are shown in FIG. 3 for conduits with L/D = 0 (**a**), 0.75 (**b**), 1.20 (**c**), 3.60 (**d**) and ∞ (**e**); here, (**e**) illustrates fully developed laminar flow in an infinitely long conduit. Although conduits with L/D ratios of 3.6 provide significant laminarity (**d**), flow through the conduit approaches (**e**) only for L/D ratios significantly greater than 10. The most-frequent, or modal, particle trajectories occur at the radius r corresponding to the maximum value (dotted) of these differential volumetric flow characteristics. At entry orifice **33,** L/D = 0 as in (**a**), and the modal particle trajectory thus occurs at r = (D - p)/2, or typically within a particle diameter p of conduit wall **30.** For small particles, the entrance modal trajectory thus coincides with the outer shear layer of the quasi-uniform flow profile. Regardless of the sharpness of the edge of the entry orifice **33,** flow at the exit orifice **34** is jetting flow (into the receiving compartment **6B** in FIG. 1), with a toroidal low-pressure region surrounding the jet and overlapping the exit ambit field **32.** As shown in FIG. 3, for particles exiting orifice **34** in FIG. 2, the modal trajectories occur in annuli centered at radii r = 0.82(D/2) or 0.76(D/2) for conduits with L/D = 0.75 (**b**) or 1.20 (**c**), respectively, and significant numbers of particles transit the conduit outside r = 0.75(D/2), through the orifice gradients of the sensitive zone. The combination of a sharp edge at orifice **33** and the low L/D ratios of typical volumeter conduits also minimizes the stabilizing effect of viscosity, and as a consequence, both the through-flow and jetting patterns are sensitive to imperfections in the edge of entry orifice **33.** Conduit L/D ratios of 2.0 or greater result in both smoother flow through the geometric volumeter conduit and less turbulence in the jetting zone outside the exit orifice; exit modal trajectories for such conduits are centered inside r = 0.725(D/2).
**4.** In volumetric applications of Coulter volumeter conduits, the most significant hydrodynamic effects are those on particle trajectory, shape, and orientation during passage through the particle-sensitive zone. As has been noted, the sensitive zone **Z** extends outward about one conduit diameter D from the entry orifice 33 in FIG. 2 and is overlapped by the convergent flow into conduit **10.** Particles **P** in the sample vessel are entrained in the constricting flow and accelerated toward the entry orifice **33.** As they enter the entry ambit **31** of the sensitive zone, particles on near-axial trajectories (e.g., trajectory AT) may be deformed by the pressure field, and nonspherical particles will be oriented with their long dimension parallel to flow; such particles generate pulses similar to the pulse of FIG. 4A. Particles entering the sensitive zone outside an axial cone approximately 50 degrees in half-angle will, in addition, be accelerated around the edge at orifice **33** and through the conduit in the annulus near wall **30** containing the intense orifice gradients. These orifice gradients cause particles on trajectories such as **BT** in FIG. 2 to generate M-shaped pulses (e.g., pulse of FIG. 4B) of anomalous amplitude (e.g., amplitude B) and duration due to gradients in, respectively, conduit field and liquid flow. Particles on an intermediate trajectory (e.g., **CT** in FIG. 2) may generate asymmetric pulses, such as the pulse in FIG. 4C, which demonstrate anomalous amplitude (e.g., amplitude C) only on their leading edge. The frequency of such pulses depends on the portion of the conduit cross section occupied by the orifice gradients and the average radial position of the modal trajectories, which in turn is determined by the length L of the conduit. Moreover, decelerating particles that have exited the geometric volumeter conduit **10** may be drawn back into the exit ambit **32** (e.g., trajectory **DT** in FIG. 2) as the suspending liquid recirculates into the toroidal low-pressure region surrounding the exit jet; if so, they generate extraneous pulses of low amplitude and long duration as shown by the pulse of FIG. 4D. Both recirculation and wall trajectories have adverse consequences significant in many applications of the Coulter principle, as illustrated in FIG. 5. In contrast to an ideal volumetric distribution **40,** the recirculating particles (e.g., trajectory **DT** in FIG. 2) result in a secondary distribution **41** in the actual sample distribution **43;** this spurious distribution reduces dynamic volumetric range and, for polydisperse samples, may altogether preclude analysis of the smaller particles. Due to their anomalous pulse amplitudes, particles following wall trajectories (e.g., **BT** and **CT** in FIG. 2) introduce artifactual high-volume skewness **42** into the actual sample distribution **43,** so degrading system ability to resolve particles of nearly identical volumes. Conduits with L/D = 3.3 have been shown to reduce skewness inaccuracies; then, exit modal trajectories are centered inside r = 0.66(D/2).

Initially, apparatus based on the Coulter principle proved so extremely useful that data inaccuracies due to these functional conduit properties were tolerated. Gradually, however, data artifacts have become unacceptable impediments, particularly in applications where highly automated implementations are desirable, and so have prompted a broad variety of prior-art techniques intended to improve the accuracy of Coulter apparatus. This facilitating art will be summarized, for two purposes: Firstly, to illustrate the real difficulty in acceptably automating the Coulter principle, and secondly, to emphasize the advantages of the present invention. Such facilitating techniques include ones involving only the volumeter conduit, ones integrating the conduit into a subassembly, or those applying post-collection processing methods to the particle data. Some of this facilitating art has led to a requirement for one or more of the following in FIG. 1: a flow director **9,** a second inlet port **12,** and additional signal processing circuits **23, 24,** and **25**, each of which will be discussed in connection with the relevant art.

As noted in Item 1) above, the spatial extent of sensitive zone **Z** in FIG. 2 defines the coincidence, sensitivity, and noise characteristics of a given Coulter volumeter conduit. Because the diameter D of conduit **10** is usually determined by clogging concerns and its minimum length L as a compromise between artifacts due to coincidence and field inhomogeneities, variations in conduit geometry have been investigated as a means of improving functional properties. In the '508 patent, longitudinal conduit profiles other than right circular cylinders were disclosed as a means of varying the electric field along the geometric conduit and so establishing a desired particle pulse-shape. Ring jewels with various longitudinal bore profiles are available and so have seen application as conduit wafers, typically to facilitate mechanical goals. One early example used a straight ring jewel with a single spherical cup at the exit (U.S. Patent No. 3,266,526); other examples use similar jewels but with the spherical cup at the conduit entry (U.S. Patent Nos. 3,638,677; 3,783,376; 4,710,021; 5,150,037; 5,402,062; and 5,432,992). Such jewels retain sharp orifices due to the large radius of their spherical cups and so are functionally indistinguishable from the art first taught in U.S. Patent No. 2,985,830. Functional improvement may be gained through a better fluidic match between the concentric entry flow and the quasi-uniform flow inside the entry orifice. Conduits which achieve this by mechanically limiting the off-axial extent of both the electric and fluidic fields at one or both orifices are described in U.S. Patent No. 3,628,140 to W. R. Hogg and Wallace H. Coulter. Here, a jetting nozzle including a conical cup with half-angle of about 45 degrees is used to couple one or both conduit orifices to the adjacent volume of liquid. Although the patent attributes the resulting volumetric improvement to focusing of the excitation current, a more probable explanation lies in the observation, noted in Item 4) above, that particles entering the conduit within an axial cone of half-angle less than 50 degrees avoid the most intense artifactual effects of both conduit fields. The concept of the conical profile has also been adapted to conduits for use with optical sensing modalities, e.g., square or circular cross sections are described in U.S. Patent No. 4,348,107 to R. C. Leif or U.S. Patent No. 4,515,274 to J. D. Hollinger and R. I. Pedroso, respectively. Such conduits of square and triangular cross section, and techniques for constructing them by assembling multiple truncated dielectric pyramids, have been described (U.S. Patent Nos. 4,673,288 and 4,818,103). Mechanical restriction of the conduit fields also decreases the volume occupied by the conduit ambits, with attendant improvement in the coincidence, noise, and recirculation characteristics of the conduit; an extreme form of this approach (U.S. Patent No. 4,484,134 to M. T. Halloran) is discussed below. In U.S. Patent No. 5,623,200, longitudinal profiles are described as a method of reducing magnitudes of the orifice gradients. Typically, however, pulse rise-times suffer due to the gradual change in cross section, and acceptable pulse characteristics usually require that the tapered section(s) be blended into a spherical cup centered on the conduit orifice, as is also taught in U.S. Patent No. 3,628,140. In U.S. Patent No. 3,733,548 to Wallace H. Coulter and W. R. Hogg, a semicircular longitudinal profile is described as producing better electric-field uniformity than the original Coulter conduit and, in principle, should also offer significant inlet flow matching. Yet another design (U.S. Patent No. 3,739,258) primarily addresses flow matching, through use of a trumpet-shaped inlet to reduce thickening of the entry shear layer. Neither of the latter conduits significantly improves limitations due to the conduit ambit fields, and without further augmentation none of the above-discussed profiles yield data sufficiently artifact-free to be of wide use. In typical wafer dielectrics, all such shaped conduits are difficult to manufacture to practicable precision, and so all are expensive to produce. In some applications they may worsen the clogging problem.

Particle coincidence degrades count data directly through lost particle pulses. It also degrades volumetric data indirectly through inappropriate inclusion of misshapen pulses in the volumetric distribution. In some applications, adaptive dilution may acceptably limit coincidence artifact (U.S. Patent No. 3,979,669 to T. J. Godin), or adaptive extension of the counting period may acceptably compensate it (U.S. Patent No. 4,009,443 to Wallace H. Coulter et al.); but the resulting variable processing times are undesirable in many applications. In principle, the pulse loss due to coincidence can be predicted statistically, and many post-collection corrective techniques, e.g., coincidence-correction circuit 23 in FIG. 1, have been described in the scientific and patent literature; see, e.g., U.S. Patent No. 3,949,197 to H. Bader for a review and example. Other approaches estimate pulse loss based on pulse occurrence rate, count, or duration, e.g., U.S. Patent Nos. 3,790,883 to P. Bergegere; 3,936,739 and 3,940,691 to W. R. Hogg; 3,949,198 to Wallace H. Coulter and W. R. Hogg; and 3,987,391 to W. R. Hogg. Limitations of several are discussed in U.S. Patent No. 4,510,438 to R. Auer, which proposes correction for the actual coincidence rate as determined by an independent optical sensing modality. These methods may acceptably correct count data for coincidence pulse loss when automated for specific applications, but only those which inhibit incorporation of misshapen pulses can improve the population volumetric distribution. All add to design complexity, and some require extensive computational resources.

The volumetric sensitivity and noise characteristics of Coulter volumeter conduits limit dynamic measurement range, particularly for smaller particles. Noise originates by two mechanisms, heating noise resulting from dissipation of the excitation current in the resistance of the particle-sensitive zone, and Johnson noise generated in this resistance. These limit the maximum practicable excitation current, on the one hand, and fundamental particle detectability on the other. In the prior art, heating noise has been reduced by providing thermally conductive paths leading away from conduit **10.** U.S. Patent No. 3,361,965 to Wallace H. Coulter and Joseph R. Coulter, Jr., describes one such structure, in which one electrode is formed as a plated metallic coating on the outer surface of the aperture tube. In U.S. Patent No. 3,714,565 to Wallace H. Coulter and W. R. Hogg the electrical path length through the suspending liquid, and so the thermal noise, is reduced by replacing the second electrode with a metallic element either composing, or coated onto the inner surface of, the aperture tube wall. The thermal effects are described more fully in U.S. Patent No. 3,771,058 to W. R. Hogg; here, volumeter conduit 10 is formed in a wafer of thermally conductive dielectric and thermally connected to remote cooler regions via electrically and thermally conductive metallic coatings extending onto both planar surfaces of the conduit wafer. In U.S. Patent No. 4,760,328 the same geometry is described in a structure which integrates sensing electronics onto the sapphire wafer. In all four of these patents the conductors cover extensive areas of the structure and variously approach volumeter conduit **10**, but do not extend so close to the conduit as to interact with the effective ambit fields of its particle-sensitive zone **Z**. However, in U.S. Patent No. 3,924,180 the Coulter conduit structure is modified by incorporation of thin conductors into the conduit structure, contiguous to conduit orifices **33** and **34**, so forming potential-sensing electrodes in a dielectric sandwich through which the conduit penetrates; the intent is to minimize noise contributions to the sensed particle signal from the liquid outside the conduit ambits **31** and **32**. Other techniques attempt to minimize noise effects, as for example the noise discriminator described in U.S. Patent No. 3,781,674 to W. A. Claps, or the averaging of signals from tandem conduit/electrode structures similar to those of U.S. Patent No. 3,924,180 to reduce Johnson noise as described in U.S. Patent No. 4,438,390 to W. R. Hogg. In critical applications, certain of these may reduce heating noise generated in the conduit, but none significantly improves the volumetric sensitivity. U.S. Patent Nos. 3,924,180 and 4,438,390 are the subject of further discussion, to follow.

In the German patent disclosure DE-A-33 29 160 a conduit structure similar to the aforementioned variant structure in U.S. Patent No. 3,924,180 is described, wherein a thin conductive layer surrounding the exit, and optionally the entry, of the conduit is provided. The conductive layer is said to reduce the number of extraneous pulses due to particles recirculating into the inhomogeneous electric-field distribution bear the conduit exit. If used as an electrode, it is desired that the conductive layer be held at a reference potential that corresponds to a desired equipotential between the conventional measuring/excitation electrodes and not used as a sensing electrode. No dimension is given for the thin conductive layers, nor is there a dimensional relationship to conduit diameter specified. The conductive layer(s) is (are) formed by vapor deposition of a noble metal in one embodiment and hence must be of the order of a micron (0.001 mm) in thickness. A drop of liquid mercury is said to form the conductive layer(s) in a second embodiment, but no details are given either of how this is done or how sufficient hydrodynamic continuity and smoothness for acceptable function are to be attained. The significant difference between the apparatus of the '180 patent and that of DE-A-33 29 160 is that the conductive layers are used as sensing electrodes in the former, while in the latter the thin conductive layer is held at a reference potential (Bezugspotential). As is well known, in this mode of usage the apparatus of the DE-A-33 29 160 disclosure would suffer the risk of bubble generation by electrolysis at the thin conductive layer, such generation directly corrupting the particle count by turbulence noise if at the exit and passage of bubbles through the conduit if at the entry.

As noted in Item 4) above, the effective sensitivity of Coulter volumeter conduit **10** may be further limited by the effects of exiting conduit flow carrying particles back into exit ambit field **32** of sensitive zone **Z**, e.g., trajectory **DT** in FIG. 2. These decelerating particles pass through the intense orifice field gradients and in many polydisperse samples result in long pulses of amplitudes comparable to those produced by the smaller particles. Unless precautions are taken to reduce the effects of these recirculating particles, both conduit sensitivity and usable dynamic range are degraded. In addition, when pulse-height techniques are used to develop volumetric distributions the pulses from recirculating particles cause extraneous peaks and broadening of actual particle distributions. At cost of reduced sample throughput, recirculation pulses may be excluded by pulse gating, e.g., by recursor pulse-edit circuit **24** in FIG. 1, either through analysis of pulses from the standard conduit or in response to a thin auxiliary detection electrode located in the conduit's geometric cylinder (U.S. Patent No. 4,161,690). Longitudinal conduit profiles can mechanically reduce the liquid volume available to such particles and may be beneficial in some applications, as noted in the aforementioned U.S. Patent No. 3,628,140 to W. R. Hogg and Wallace H. Coulter. Other applications are more critical, and many subassemblies incorporating the volumeter conduit have been described which attempt to prevent particles from recirculating into the conduit ambit fields. These either structure the exit flow path so that particles are mechanically prevented from re-entering the sensitive zone (U.S. Patent Nos. 3,299,354 and 3,746,976 to W. R. Hogg or 4,484,134 to M. T. Halloran), use auxiliary fluidic circuits to dynamically sweep exiting particles away from the exit orifice (U.S. Patent No. 4,014,611 to R. O. Simpson and T. J. Godin) or combine these two approaches (U.S. Patent Nos. 3,902,115 to W. R. Hogg et al. and 4,491,786 to T. J. Godin, which contains a review of such methods). Other implementations have also been described (U.S. Patent Nos. 4,253,058; 4,290,011; 4,434,398; 4,710,021; 5,402,062; 5,432,992; and 5,623,200). The dynamic sweep-flow method is widely used and involves metering appropriate volumes of the liquid medium **M** through a second inlet port **12** in FIG. 1, whereby the particles exiting conduit **10** are swept out of exit ambit field **32.** These complex subassemblies can essentially eliminate recirculating particles, may include shaped conduits, and often include additional structure addressing effects of particles following wall trajectories. However, the large fluid volumes required for effective sweep-flow make it impractical to volumetrically determine particle concentration by positive-displacement methods. The approach taken by M. T. Halloran (in the aforementioned U.S. Patent No. 4,484,134) potentially avoids need for auxiliary fluidic circuits and structures, by extending the insulating discs of U.S. Patent No. 3,924,180 into an elongate tubular configuration; of an inner diameter substantially equal to that of the volumeter conduit, such extensions mechanically prevent recirculation of exiting particles into the exit ambit of the conduit and when carefully constructed can provide fluidic advantages of long conduits. However, for many applications of the Coulter principle such structures require complex mechanical designs difficult to construct to the necessary precision and tend to clog in use, due to their fluidic length.

The effective resolving ability of Coulter volumeter conduit **10** is determined by the hydrodynamic effects discussed in Item 4) above, specifically those carrying particles through the geometric conduit near its wall **30.** The resultant characteristic M-shaped pulses (e.g., those in FIG. 4B or 4C) produce artifacts in the volumetric distribution, the importance of which is attested by the large amount of remedial prior art addressing them. This art is divided between two approaches, the early post-collection one of excluding the M-shaped pulses from the processed data and the later direct one of hydrodynamically controlling presentation of particles to the sensitive zone of the conduit. The electric field in the conduit sensitive zone **Z**, and particle trajectories (e.g., **BT** or **CT**) through it which produce problematic pulses, are illustrated in FIG. 2. Deletion of such pulses from the volumetric distribution data is suggested in U.S. Patent No. 3,668,531 to W. R. Hogg, from which FIG. 2 is adapted. Other approaches have been described (U.S. Patents Nos. 3,700,867 and 3,701,029 to W. R. Hogg; 3,710,263 and 3,710,264 to E. N. Doty and W. R. Hogg; 3,783,391 to W. R. Hogg and Wallace H. Coulter; 3,863,160 to E. N. Doty; and 3,961,249 to Wallace H. Coulter), all of which incorporate gating circuitry (**25** in FIG. 1) responsive to various anomalous parameters of the misshapen pulses by which these pulses may be deleted from the pulse train processed for population distributions. Some of these are discussed in U.S. Patent No. 3,863,159 to Wallace H. Coulter and E. N. Doty and in U.S. Patent No. 4,797,624 to H. J. Dunstan et al., either of which well illustrates such gating methods. Gating may also be done in response to a detection signal from an auxiliary electrode (U.S. Patent No. 4,161,690). The complexity of working implementations encouraged other approaches, and a simple flow-aligning device in front of the Coulter conduit was shown to improve volumetric accuracy (U.S. Patent Nos. 3,739,268; 4,290,011; and 4,434,398). Further improvement was gained by injecting the particle stream directly into the conduit through an auxiliary flow director (U.S. Patent Nos. 3,793,587 to R. Thom and J. Schulz and 3,810,010 to R. Thom), a technique now known as hydrodynamically focused flow. If in FIG. 1 the particle suspension is introduced through flow director **9** while liquid medium **M** is appropriately metered through port **8,** the particles entering compartment **6A** will be entrained into a sheath of the liquid medium **M** and carried through conduit **10** in the core of the composite flow pattern, with two important consequences. Firstly, the directed flow pattern prevents particles entering conduit **10** on trajectories such as **BT** and **CT** in FIG. 2, thereby eliminating pulses such as those in FIGS. 4B and 4C. Secondly, all particles transit conduit **10** inside the sheath liquid, which serves to center the particle trajectories inside the cross section of conduit **10** having relatively homogeneous electric fields, further reducing occurrence of anomalous particle pulses such as the pulse of FIG. 4B. Numerous conduit subassemblies incorporating focused flow have been described (e.g., U.S. Patent Nos. 4,014,611 to R. O. Simpson and T. J. Godin; 4,395,676 to J. D. Hollinger and W. R. Hogg; 4,484,134 to M. T. Halloran; 4,515,274 to J. D. Hollinger and R. I. Pedroso; and 4,525,666 to M. R. Groves; 3,871,770; 4,165,484; 4,253,058; 4,760,328; 5,150,037; and 5,623,200), some of which also include provisions addressing recirculating particles and the best of which can yield nearly ideal volumetric distributions. All add complexity to practical apparatus, and the large fluid volumes required for effective sample focusing make it impractical to volumetrically determine particle concentration by positive-displacement methods. Because the entraining sheath flow restricts the sample stream to a small central portion of the geometric volumeter conduit, a functional concentration of parties within this volume occurs and limitation of coincidence effects typically requires use of lower particle concentrations than with unfocused systems.

Nearly all of the prior art concerns traditional volumeter conduits and the two-terminal implementation of the Coulter principle described in the '508 patent, but this simple form has been elaborated in, e.g., U.S. Patent Nos. 3,924,180; 4,438,390 to W. R. Hogg; and 4,484,134 to M. T. Halloran. The fluidic advantages of long conduits (i.e., ones having L/D ≥ 2) have long been known, but the large coincidence volumes and noise levels associated with such conduits limit their practical usefulness. As has been discussed, in U.S. Patent No. 3,924,180 thin insulated electrodes are located along the volumeter conduit to enable four-terminal potential sensing of particle pulsations from a small portion of the actual conduit length as one way of minimizing these limitations, and in U.S. Patent No. 4,438,390 the structure of U.S. Patent No. 3,924,180 is replicated in a single structure to produce a plurality of potential-sensitive zones in tandem, the potentials sensed thereby being averaged as a means of reducing Johnson noise. In U.S. Patent No. 4,484,134 the insulative structures covering the electrodes in U.S. Patent No. 3,924,180 are extended into tubular form, as has also been discussed. The plural electrodes incorporated into the conduit structures of these three patents are required to be as thin as practicable, to avoid significant influence on the conventional electric fields resulting from the excitation current, and are electrically connected to external sensing apparatus. The liquid column in these structures thus forms a resistance divider across which the total particle pulse amplitude is developed, but across only that section separating the potential-sensing electrodes of which is the sensed particle signal developed. Consequently, the loss of signal pulse amplitude due to the voltage-dividing action of the liquid column may offset any decrease in noise. Although these patents allude to fluidic advantages of the longer conduit structures, neither they nor the other known prior art either detail the origin of such advantages or suggest a specific method whereby such advantages may be systematically obtained.

There is no question that the accuracy, resolution, and convenience of Coulter apparatus have substantially benefited through the teachings of the many patents cited above, and fully automated apparatus is now available in which functional properties of the Coulter volumeter conduit are acceptably compensated. The Coulter principle has gained worldwide acceptance, and many national standards include methods based on it. Apparatus incorporating the Coulter principle is now available from a number of manufacturers, and its economic importance is attested by the voluminous prior art which has developed around it. However, much of this art concerns methods which increase apparatus complexity, with attendant decreased reliability and increased costs throughout the design, production, and maintenance cycle. Most requires multiple precision components difficult of manufacture and assembly to the requisite accuracy. Ones requiring auxiliary fluidic subsystems preclude positive-displacement volumetric determinations of particle concentration. Ones based on post-collection data processing discard particle data, and so require greater sample volumes or longer sample processing times. Each only mitigates an undesirable consequence of particle/field interaction in the particle-sensitive zone of the Coulter volumeter conduit, rather than amending the underlying characteristics of the electric and hydrodynamic fields. Because the prior art addresses their consequences, rather than their origins, functional properties of Coulter volumeter conduits have evolved little since the issuance of the '508 patent in 1953.

Reliability and cost competitiveness have become increasingly important considerations in apparatus design, and it would be advantageous to achieve the performance now attainable through the prior art summarized above, but without the increased complexity and costs associated with this art. It would be preferable to obviate such facilitating methods and apparatus, by directly amending field characteristics of the volumeter conduit. It would be desirable that any solution to this long-standing need be directly substitutable for the Coulter volumeter conduit of existing methods and apparatus, e.g., those of U.S. Patent Nos. 2,656,508 or 3,259,842. It would also be desirable that this solution permit volumetric determination of particle concentration by positive-displacement methods such as, e.g., those described in U.S. Patent No. 2,869,078.

### SUMMARY OF THE INVENTION

In view of the foregoing discussion, an important object of this invention is to provide an improved apparatus of the type discussed above for sensing and characterizing particles, the apparatus combining accuracy in results with simplicity in construction.

Another object of the invention is to provide a volumeter assembly which, owing to its unique structure, operates to amend characteristics of the electric and hydrodynamic fields associated with the Coulter volumeter conduit, thereby simplifying the make-up of instruments of the type which sense and characterize particles by means of the Coulter principle.

Yet another object of this invention is to provide an improved method for sensing and characterizing particles by the Coulter principle.

In accordance with the present invention there is provided a new and improved apparatus for sensing and characterizing particles by the Coulter principle. As in the prior art, the apparatus of the invention comprises: (a) a volumeter conduit through which a liquid suspension of particles to be sensed and characterized can be made to pass, (b) a liquid handling-system for causing the particle suspension to pass through the volumeter conduit; (c) a first electrical circuit for producing a nominal electrical excitation current through the volumeter conduit, such excitation current being effective to establish in the vicinity of the volumeter conduit an electric field having a particle-sensitive zone in which changes in the nominal excitation current as produced by particles passing through the conduit simultaneously with the excitation current are measurable; and (d) a second electrical circuit for monitoring the amplitude of the electrical current through the volumeter conduit to sense the characteristics of particles passing through said conduit. In contrast to the prior-art apparatus, in which the volumeter conduit is formed in a homogeneous dielectric material so that the wall defining the conduit is of uniformly high electrical resistivity, the volumeter assembly in the new apparatus is so constructed that, in the broadest sense, the electrical resistivity of the wall defining the volumeter conduit therein is made to effectively vary in an axisymmetric manner along the conduit length (i.e., in a direction parallel to the flow of suspension through the conduit) so as to define a conduit having in any longitudinal conduit section a delimited central region of high electrical resistivity which is smoothly contiguous on its opposing boundaries to uninsulated distal regions of substantially lesser electrical resistivity. The electrical resistivity of the delimited central region is substantially greater, and the electrical resistivity of the uninsulated distal regions less, than that of the liquid in which the particles to be characterized are suspended. The delimited central high-resistivity region of the improved volumeter conduit functions as a traditional Coulter volumeter conduit. The uninsulated distal elements of the new volumeter conduit are made to have a minimum dimension along the conduit wall depending upon the desired detectability threshold in particle size, i.e., this dimension is made at least equal to the axial extent of the effective ambit electric fields of a traditional Coulter volumeter conduit having a cross-sectional geometry identical to that of the delimited central region of high resistivity in the improved volumeter conduit. Through their immersion in the suspending liquid, the uninsulated distal elements of the new volumeter conduit are electrically coupled to the electric field established by the excitation current through the high-resistivity region of the conduit. The uninsulated distal regions of the improved volumeter conduit assume independent potentials and independently function to amend both the electric and hydrodynamic fields in the vicinity of the volumeter conduit by: (i) shaping the electric field resulting from the excitation current so as to substantially confine the particle-sensitive zone within the physical boundaries of the conduit; (ii) enabling development of quasi-laminar flow through the particle-sensitive zone so as to significantly increase the proportion of particles per second transiting the substantially homogeneous areas of the particle-sensitive zone; and (iii) preventing particles that have already passed through the conduit and are on recirculating trajectories from re-entering the particle-sensitive zone.

The field-amending volumeter conduit of the invention affords the following advantages, when compared with prior-art volumeter conduits for sensing and characterizing particles:
1. The ambit electric fields of the particle-sensitive zone resulting from the excitation current are substantially smaller, thereby reducing the likelihood of particle coincidence while increasing volumetric sensitivity;
2. The cross section of the particle-sensitive zone containing substantially homogeneous field regions is significantly increased, thereby reducing the frequency of anomalous pulses and increasing the range in particle diameter for which the dynamic response is linear;
3. The suspension flow profile through the particle-sensitive zone is quasi-laminar rather than quasi-uniform, whereby the proportion of particles per second transiting the substantially homogeneous areas of the particle-sensitive zone is increased, further reducing the frequency of anomalous pulses; and
4. Particles are prevented from transiting the particle-sensitive zone on trajectories curving through the ambit electric fields, thereby eliminating both anomalous pulses due to particles entering the sensitive zone on high-angle trajectories and extraneous pulses due to exiting particles recirculating into the exit ambit field.

Because of these advantageous functional properties of the field-amending volumeter conduit, with Coulter apparatus incorporating it need is avoided for the complex assemblies and subsystems required by facilitating methods involving hydrodynamically-focused flow or sweep flow. Consequently, when compared with present apparatus for sensing and characterizing particles by the Coulter principle, apparatus incorporating the field-amending volumeter conduit of the invention affords some or all of the following further advantages:
A. Facilitating subsystems related to features **9, 12, 23, 24,** and **25** in FIG. 1 may be eliminated, with significant reduction in manufacturing costs and appreciable improvement in system reliability but without important data inaccuracies;
B. Because no auxiliary fluidic subsystems are required, particle concentration may be readily determined by positive-displacement volumetric methods;
C. Because functional sample dilution due to sheath fluid is eliminated and need for post-collection pulse deletions can be significantly reduced, sample volumes and processing times may be reduced; and
D. Because of the significantly reduced coincidence volume compared to the Coulter volumeter conduit, the rate of sample throughput can be increased for a given detectability threshold and level of coincidence artifact, or a larger conduit diameter may be used to decrease clogging concerns.

According to another aspect of the invention, volumeter assemblies incorporating field-amending volumeter conduits may be embodied in a variety of dissimilar constructions. In one preferred embodiment, the field-amending volumeter conduit is defined by a through-hole formed in a disc of electrically inhomogeneous material. At the site selected for forming the through-hole, the electrical resistivity of the disc is made to effectively vary through the thickness thereof, e.g., by suitable doping, to define a central delimited region of high electrical resistivity which is contiguously bounded by uninsulated distal elements of substantially lesser electrical resistivity which intersect the faces of the disc. A hydrodynamically smooth opening of the desired cross-sectional and longitudinal geometry is then formed through the disc. The delimited central high-resistivity region of the volumeter conduit so formed functions as a traditional Coulter volumeter conduit. The delimited central high-resistivity region and the bounding uninsulated distal lesser-resistivity elements thus collectively form a hydrodynamically smooth volumeter conduit, in which the electric and hydrodynamic fields of the traditional volumeter conduit are advantageously amended in the manner above noted. According to an alternative embodiment, the delimited central region of the improved volumeter conduit is defined by a traditional conduit wafer, i.e., a dielectric wafer containing a central circular conduit as described in U.S. Patent Nos. 2,985,830 or 3,771,058, and the distal elements of lesser resistivity are defined by uninsulated, electrically conductive, circular collars attached to opposite sides of the conduit wafer. Each collar is made to have an outer diameter equal to at least four times, and a thickness between one to three times, the diameter of the conduit in the conduit wafer. Each collar has a central opening which is dimensioned and shaped to precisely conform to the conduit in the conduit wafer, and the collars are arranged on opposite sides of the conduit wafer so that the respective collar openings overlie and remain congruent with the entry and exit orifices of the conduit therein. The conduit in the conduit wafer and the openings in the conductive collars thus collectively form a hydrodynamically smooth volumeter conduit, in which the electric and hydrodynamic fields of the traditional volumeter conduit are advantageously amended in the manner above noted. Volumeter assemblies according to these or other embodiments of the field-amending concept may be adapted by prior-art methods to enable simultaneous passage of a suitable suspension of the particles to be analyzed and an electrical excitation current through the field-amending conduit.

Still another aspect of the invention is to electrically couple either or both of the uninsulated distal regions of the conduit to circuitry for controlling the current flow through the conduit, in which case the uninsulated distal regions further serve as electrodes.

Yet another aspect of the invention is the provision of an improved method for sensing and characterizing particles in which the particles to be characterized are suspended in a liquid medium having an electrical impedance per unit volume which differs from that of the particles and passed substantially one at a time through the field-amending volumeter conduit of the invention while changes in a pre-established electrical current through such conduit are monitored.

The invention and its advantages will be better understood from the ensuing detailed description of preferred embodiments, reference being made to the accompanying drawings in which like reference characters denote like parts.

### BRIEF DESCRIPTION OF THE DRAWINGS

FIG. 1 illustrates a prior art apparatus for sensing and characterizing particles by the Coulter principle;
FIG. 2 illustrates a longitudinal section through the conduit and particle-sensitive zone of a traditional volumeter conduit wafer;
FIG. 3 illustrates the hydrodynamic effects of increasing the UD ratio of a circular conduit for common particle-suspending liquids;
FIGS. 4A - 4D illustrate a series of exemplary current pulses produced by particles transiting the FIG. 2 apparatus on the various trajectories shown therein;
FIG. 5 consists of superimposed histograms illustrating the degrading effects of the anomalous and extraneous pulses of FIGS. 4B - 4D;
FIG. 6 illustrates the new apparatus for sensing and characterizing particles by the Coulter principle;
FIG. 7 illustrates a longitudinal section through the conduit and particle-sensitive zone of the volumeter assembly of the invention;
FIGS. 8A and 8B illustrates front and longitudinal-section views of an alternative embodiment of the volumeter assembly of the invention;
FIG. 9 consists of superimposed histograms illustrating the advantageous effects of the present invention vis-à-vis the prior art; and
FIGS. 10 - 13 illustrate longitudinal sections of alternative embodiments of the volumeter assembly of the invention.
FIGS. 14 - 18 illustrate alternative embodiments in which the relatively conductive distal regions of the volumeter conduit serve as electrodes for controlling the nominal current flow through the volumeter.

### DETAILED DESCRIPTION OF PREFERRED EMBODIMENTS

### EMBODIMENT 1

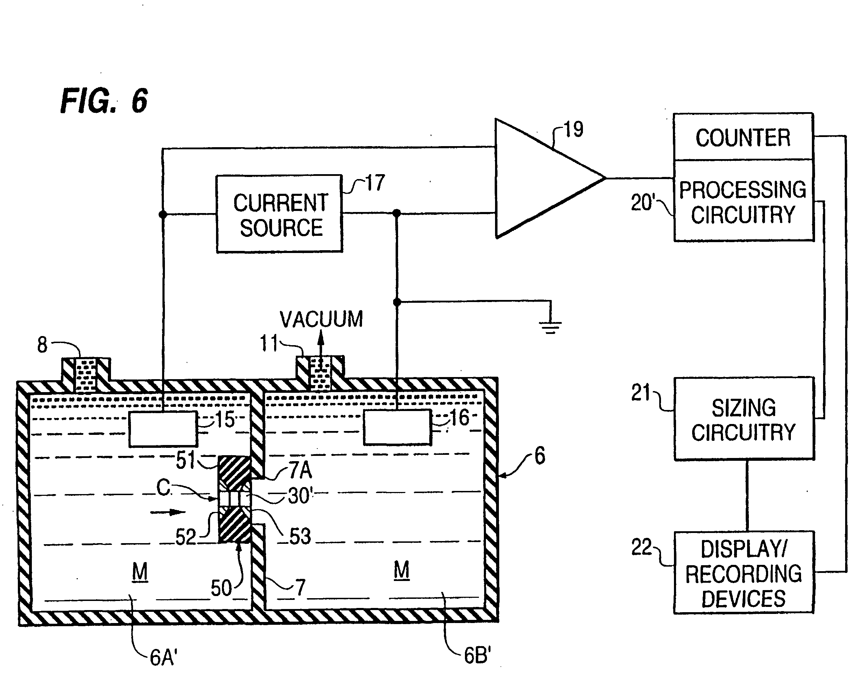

In FIG. 6 is schematically illustrated, in accordance with a preferred embodiment of the invention, an improved apparatus for sensing and characterizing particles, one which advantageously combines accuracy in characterization results with simplicity in apparatus construction. Like the prior-art apparatus of FIG. 1, the apparatus of the invention preferably comprises a dual-compartment dielectric vessel **6** containing a wall **7** of dielectric material separating compartments **6A'** and **6B'**, each of which is filled with a particle-suspending liquid medium **M** (e.g., isotonic saline solution) and each of which contains a respective excitation electrode **15** or **16.** Whereas the FIG. 1 apparatus comprises a conduit wafer **W** incorporating volumeter conduit **10,** the FIG. 6 apparatus comprises a volumeter assembly **50** incorporating improved volumeter conduit **C**. Although volumeter assembly **50** may be made to constitute wall **7,** it is preferably provided as an independent structure, e.g., as a disc of appropriate dimensions. Volumeter assembly **50** is mounted over relatively large opening **7A** in wall **7** and is substantially surrounded by and immersed in the particle-suspending medium **M** filling the compartments of vessel **6.** A small through-hole transpiercing volumeter assembly **50** provides an improved volumeter conduit **C** which is caused to constitute the only operative electrical and fluidic connection between compartments **6A'** and **6B'**. As is discussed in detail below, the novel structure of volumeter assembly **50** is caused to provide conduit **C** with a delimited central element of high electrical resistivity which is smoothly contiguous on both its axially opposing boundaries to distal elements of substantially lesser resistivity.

In operation, a conventional current source **17** electrically connected to excitation electrodes **15** and **16** establishes an appropriate nominal current flow through improved conduit **C,** while an appropriate vacuum applied to port **11** simultaneously establishes a flow of particle suspension (introduced into inlet port **8**) from compartment **6A'** through conduit **C** into compartment **6B'**. Conduit **C** constricts both the electric and hydrodynamic fields so established in vessel **6,** so that wall **30'** of conduit **C** surrounds and defines the flows of particle suspension and electric current between compartments **6A'** and **6B'**. It is preferred that current source **17** be a constant-current source so that the current it supplies is substantially independent of changes in impedance between electrodes **15** and **16** (e.g., due to substitution of conduits **C** having different diameters or lengths, temperature-induced changes in the resistivity of particle-suspending medium **M,** or substitution of suspending medium **M** having a different resistivity), but current source **17** may less preferably be a voltage source having a high internal impedance. Also electrically connected to electrodes **15** and **16**, conventional circuitry **19, 20',** and **21** operates to sense, monitor, and process current pulsations in conduit current as occasioned by the more or less individual passage of particles through conduit C, and conventional devices **22** operate to display or record particle count and characteristic data. It is preferred, but not required, that AC-coupled sensing circuit **19** have low input impedance compared to the conduit impedance. In brief, except for volumeter assembly **50** and the advantages to apparatus make-up resulting from the functional properties of conduit **C** thereof, the apparatus of FIG. 6 is substantially a prior-art apparatus of FIG. 1, e.g., one described in U.S. Patent Nos. 2,656,508 or 3,259,842.

However, the novel properties of conduit **C** enable the apparatus of FIG. 6 to provide substantially the same accuracy in particle characterization data as the prior-art apparatus of FIG. 1, but without requiring the facilitating fluidic subsystems associated with features **9** and **12** or the facilitating pulse-editing and deletion circuits **23, 24,** and **25** of FIG. 1. These commercially significant omissions from FIG. 1 are indicated by primed features **6A'**, **6B'**, and **20'** in FIG. 6. As will be discussed, data inaccuracies due to anomalous pulses from particles on near-wall trajectories are substantially reduced by several mechanisms, and in all but the most demanding applications the complex hydrodynamically-focused flow subsystem driving director **9** in FIG. 1 and anomalous pulse-edit circuit **25** in FIG. 1 can both be omitted from the FIG. 6 apparatus. Extraneous volumetric distributions due to recirculating particles are substantially eliminated, so the sweep-flow subsystem driving port **12** in FIG. 1 and the recursor pulse-edit circuit **24** in FIG. 1 can also both be omitted from the FIG. 6 apparatus. Because functional sample dilution can be avoided by omission of the auxiliary fluidic subsystems in FIG. 1, particle concentration may be readily determined in the FIG. 6 apparatus by positive-displacement methods, e.g., such as described in U.S. Patent No. 2,869,078. Because pulse deletions due to recirculation or anomalous pulses can be avoided in the FIG. 6 apparatus, required sample volumes and processing times may be reduced. Further, coincidence-correction circuit **23** in FIG. 1 can also be omitted in many applications of the FIG. 6 apparatus, while other applications requiring higher processing rates may benefit from simplified forms of this circuit; since post-collection pulse deletions can be minimized, required sample volumes and processing times may be further reduced. In addition, other operational advantages result from the significantly reduced coincidence volume provided by conduit **C**, i.e., greater sample throughput rates can be used for a given detectability threshold and level of coincidence artifact, or to decrease clogging concerns a larger-diameter conduit can be used for a given volumetric sensitivity. Thus, improved volumeter conduit **C** permits elimination of much complex facilitating prior art from the FIG. 1 apparatus, without significant data inaccuracies, whereby the new apparatus of FIG. 6 offers important operational advantages, better cost effectivity, greater reliability, and other commercial advantages. These advantages owe to the novel properties of conduit **C**, which originate in a characteristic axial variation in axisymmetric electrical resistivity through the novel structure of volumeter assembly **50** in which conduit **C** is formed.

In accordance with the present invention, the FIG. 6 apparatus is characterized by a volumeter assembly **50** which provides novel functional properties originating in the electrical properties of the solid material from which it is constructed. The material composing volumeter assembly **50** is transpierced by a small through-hole of appropriate cross-section (not necessarily constant) the hydrodynamically smooth wall **30'** of which defines conduit **C**. The axis of conduit **C** coincides with the intended direction of flow therethrough and is preferably made to coincide with that of volumeter assembly **50**. The electrical resistivity of the solid material of which volumeter assembly **50** is formed is, in the broadest sense, made to vary in a substantially axisymmetric manner along the axis of conduit **C**. Specifically, the electrical resistivity of the solid material surrounding conduit **C** is preferably so selected as to cause any longitudinal section of volumeter assembly **50** including the axis of conduit **C** to effectively comprise an axisymmetric, delimited central region of high electrical resistivity which is smoothly contiguous on both its axially opposing boundaries to distal regions of substantially lesser electrical resistivity. Consequently, hydrodynamically smooth wall **30'** of conduit **C** is made to have axisymmetric electrical resistivity which is caused to effectively vary in a desired manner along the axis of the conduit, whereas wall **30** of conduit **10** in homogeneous conduit wafer **W** of the FIG. 1 apparatus is only required to be hydrodynamically smooth. Such axial gradients in axisymmetric resistivity may be induced, e.g., by suitably doping an appropriate high-resistivity solid member to form regions of effectively lesser resistivity therein, or through mechanical assembly and joining of individual discrete layers or elements having appropriate unequal but substantially uniform individual resistivities into a composite solid material.

The characterizing resistivity profile through the material composing volumeter assembly **50** is preferably realized by causing a common separating layer or element **51**, composed of solid material of resistivity substantially greater than that of suspending medium **M** in which the particles to be characterized are suspended, to be smoothly contiguous and unitary with respective axially-distal layers or elements **52** and **53**, each of the distal layers or elements being composed of uninsulated solid material of resistivity substantially less than that of suspending medium **M.** (The terms "layer" or "element" will hereinafter be used interchangeably to indicate such discrete components of volumeter assemblies.) It is preferred that conduit **C** comprise a continuous wall **30'** defining a right cylindrical conduit of circular cross-section through volumeter assembly **50,** i.e., wall **30'** is a bore-wall and the conduit cross-section is constant along the axis. Less preferably, prismatic or non-constant conduit cross-sections may be advantageous in some applications of such volumeter assemblies.

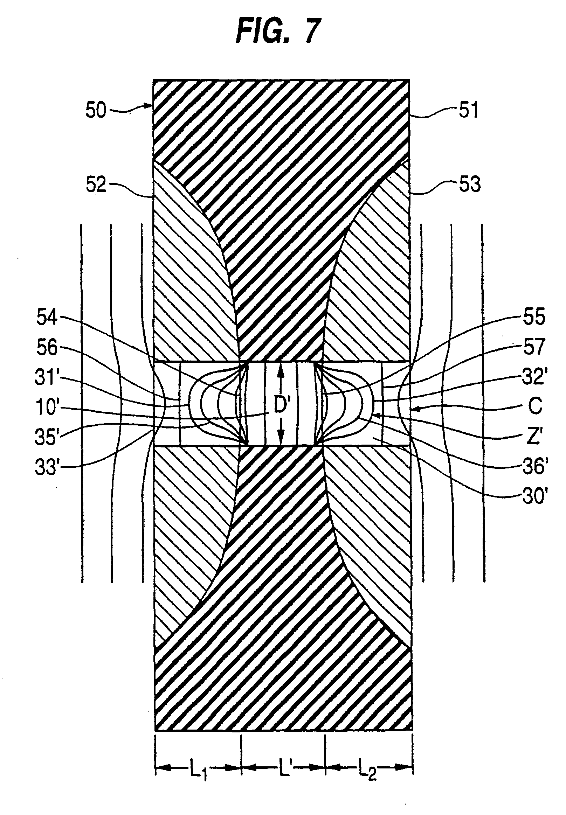

With reference now to FIG. 7, conduit **C** is thus defined by a continuous, hydrodynamically smooth wall **30'** collectively comprising sequential wall portions through elements **52**, **51**, and **53**, the contiguous complementary surfaces of elements **52** and **51** forming hydrodynamically smooth delimiting boundary **54**, and those of **51** and **53** forming hydrodynamically smooth delimiting boundary **55**, respectively, between the portions of conduit **C** bounded by the respective elements **52**, **51**, and **53**. Each wall portion of conduit **C** is thus circumferentially bounded by the uninsulated solid material composing the respective element and smoothly contiguous at delimiting boundaries **54** and **55**, respectively, to a congruent adjacent wall portion. Consequently, the characteristic electrical resistivity of defining wall 30' is caused to be substantially axisymmetric, but is made to have significant axial gradients at delimiting boundaries **54** and **55** along the length of any longitudinal section of conduit **C.** The characterizing axial variation in axisymmetric resistivities substantially originates in the characteristics of the solid materials selected for the make-up of volumeter assembly **50**, although geometries of individual elements may be caused to augment certain properties of conduit **C.** As will be apparent to those skilled in the appropriate arts, volumeter assemblies incorporating the characteristic axial variation in axisymmetric resistivity of wall **30'** may be embodied by a variety of techniques in a broad range of designs, geometries, and materials.

As with the prior-art apparatus of FIG. 1, characteristics of signal pulses generated by particles passing through conduit **C** of FIG. 6 result from a complex interaction of the particles with both the electric field established in the suspending medium **M** by the excitation current between electrodes **15** and **16** and the hydrodynamic field established by the particle-suspending medium **M** carrying the particles through conduit **C**. Under influence of the electric field established by the current between electrodes **15** and **16** (and without connection to any external electrical circuitry), uninsulated distal elements **52** and **53** assume individual potentials over their surfaces which directly superimpose independent equipotentials in the vicinity of conduit **C**. As will be described in detail below, the distribution of the resultant electric field making up particle-sensitive zone **Z'** in FIG. 7 depends on conduit diameter D' and axial length L' of conduit portion **10',** whereas the distribution of the resultant hydrodynamic through-field depends on D' and the cumulative length (L' + L₁ + L₂) of conduit C, where L₁ and L₂ are the dimensions along wall **30'** of elements **52** and **53,** respectively. It has been found that the diameter D' and length L' of conduit portion **10'** can be selected to provide specific electrical characteristics in sensitive zone **Z'** of conduit **C** and that (without adversely affecting the electrical characteristics of the sensitive zone) nonminimal lengths of L₁ and L₂. of elements **52** and **53** can be made to facilitate quasi-laminar flow through the sensitive zone so as to significantly increase the proportion of particles per second transiting the substantially homogeneous areas of the sensitive zone. Consequently, it has been found that effects of the electric and hydrodynamic fields on pulses generated by particles transiting sensitive zone **Z'** of volumeter conduit **C** can be independently optimized. This is in distinct contrast to the prior-art apparatus of FIG. 1, in which conduit wafer **W** is constructed of homogeneous dielectric material so that wall **30** defining conduit **10** in FIG. 2 is of uniformly high electrical resistivity, and the electric and hydrodynamic fields in conduit **10** are consequently co-determined by the conduit diameter **D** and the thickness L of the conduit wafer **W.** Some relevant field properties of improved volumeter conduit **C** in FIG. 7 can now be contrasted with those aforementioned ones of the FIG. 2 conduit **10:**
1. Due to their immersion in the particle-suspending liquid medium **M** surrounding volumeter assembly **50** and filling conduit **C,** uninsulated distal elements **52** and **53** of volumeter assembly **50** in FIG. 7 assume individual potentials over their surfaces which impose new field distributions in the axisymmetric electric field established by the current through the conduit. For axial lengths L₁ or L₂ of elements **52** or **53** greater than approximately the conduit diameter D', the resultant electric field external to conduit **C** (i.e., between electrodes **15** and **16** and elements **52** and **53,** respectively, in FIG. 6) is essentially homogeneous. The axisymmetric field regions between ambit fields **31'** and **32'** and the external fields, indicated by equipotentials **56** and **57,** are substantially at the potential of the respective element **52** or **53** and are of very low field strength and gradient. These equipotential regions serve to functionally isolate ambit fields **31'** and **32'** from the external electric field so that the ambit fields are totally confined within volumeter conduit **C.** The resultant particle-sensitive zone **Z'** functionally includes conduit portion **10'** between delimiting boundaries **54** and **55,** plus the two semielliptical ambit electric fields **31'** and **32'** coaxial with and extending outside the delimiting boundaries into portions of conduit **C** circumferentially bounded by elements **52** and **53**. Thus, portion **10'** of conduit **C** provides a consistent reference volume against which the volume of liquid displaced by particles may be compared and is therefore functionally analogous to traditional Coulter volumeter conduit **10** in FIGS. 1 and 2. Analogously to the traditional Coulter conduit, the distribution of the resultant electric field making up sensitive zone **Z'** depends on conduit diameter D' at boundaries **54** and **55** and axial length L' of conduit portion **10'**, while the semielliptical equipotentials corresponding to the desired detectability threshold determine the effective spatial extent of ambit fields **31'** and **32'.** It has been found that the minimum axial lengths L₁ and L₂ of elements **52** and **53** can be selected according to the desired detectability threshold in particle size. Consequently, lengths L₁ and L₂ are made at least equal to the axial extent of the threshold ambit electric fields of a traditional Coulter volumeter conduit having diameter D equal to the diameter D' of functional Coulter conduit **10',** or for a one percent detectability threshold, L₁ = L₂ ≅ D'. (However, L₁ and L₂ may be increased above these minimal lengths to improve conduit hydrodynamics through sensitive zone **Z'**; *vide infra,* Item 3.) For L₁ = L₂ = D', it has been found that the effective ambit fields extend outward from the respective entrance and exit boundaries **54** and **55** of functional Coulter conduit **10'** approximately D'/2, with equal lateral intercepts, for a one-percent detectability threshold; these dimensions compare to D and 1.15D, respectively, for the traditional Coulter conduit. It can be shown that the portion of particle-sensitive zone **Z'** within the functional Coulter conduit **10'** is (L'/D')/(L'/D'+ 16K'/3), where K' is now the product of the three diameter-normalized intercepts of the chosen threshold equipotential on a coordinate system with axial origins at the center of particular boundary **54** or **55.** For the one-percent equipotentials **35'** and **36',** the axial length of sensitive zone **Z'** is (L' + D'), K' = 0.125, and for L'/D' = 1.2, only 36 percent of the sensitive zone is external to the functional Coulter conduit **10';** these values compare to (L + 2D), K =1.325, and 85 percent, respectively, for a traditional Coulter conduit of the same diameter and length. Thus, for equivalent functional dimensions and a detectability threshold of one percent, the ambit portion of the sensitive zone **Z'** for improved volumeter conduit **C** is approximately 0.095, and its coincidence volume 0.226, of that for the comparable Coulter conduit; for conduits with L'/D' = 0.75 = L/D, the ratio of coincidence volumes is 0.180. The smaller coincidence volume of volumeter conduit **C** reduces the occurrence of misshapen pulses due to simultaneous passage of multiple particles and so removes some artifactual skewness (**42** in FIG. 5) from the particle histogram. Volumetric sensitivities are inversely proportional to coincidence volumes and so are improved in conduit **C** by a factor of 5.51.
2. The electric field within functional Coulter conduit **10'** is similar to that within the traditional Coulter conduit. However, indirect data based on characteristics of particle pulses suggest that midpoint homogeneity within this part of particle-sensitive zone **Z'** is achieved for axial lengths of this portion about 20 percent less than for a traditional Coulter conduit of equivalent cross-sectional geometry. More importantly, these data also indicate that the orifice gradients of sensitive zone **Z'** are confined to the annular region adjacent to the conduit wall **30'** and outside the radius r' = 0.85(D'/2), compared to r = 0.75(D/2) for the traditional Coulter conduit, i.e., the cross section of functional Coulter conduit **10'** through which particles can transit without producing an anomalous pulse is larger than for a traditional Coulter of comparable functional dimensions. For a given degree of anomalous pulse amplitude or a specified nonlinearity in volumetric response, the cross-sectional area through which particles can transit particle-sensitive zone **Z'** of the improved volumeter conduit **C** may be approximately 28 percent greater than for the traditional Coulter conduit of equivalent geometry. These favorable and unexpected electric-field modifications combine with the hydrodynamic findings of Item 3 in an advantageous manner.
3. Hydrodynamic characteristics not available with traditional Coulter conduits may be provided in improved volumeter conduit **C** by making the axial lengths L₁ and L₂ of elements **52** and **53** greater than the minimum required to achieve the aforesaid electrical effects on the particle-sensitive zone, i.e., greater than D'. As has been noted, the frequency of anomalous pulses (e.g., those of FIGS. 4B or 4C) depends on the portion of the conduit cross-section occupied by the orifice gradients of the sensitive zone and on the radial position of the modal particle trajectories through it. For a given conduit the range of radial positions of the modal trajectories lies between the radial positions of the entry and exit modal trajectories, while the mean radial position lies at approximately one-half the sum of these positions. In traditional Coulter conduit **10** of FIG. 2, the entry modal trajectory for particles of diameter p overlies the shear layer near the wall, at r = (D-p)/2 approximately, and the position of the exit modal trajectory is determined by the length L of the conduit **10**, as shown in FIG. 3. Thus, while the average radial position of the modal particle trajectories may be moved inward out of the high-gradient wall fields as in the prior long-conduit art, improvement is limited by the near-wall position of the modal trajectories in the quasi-uniform entry flow. In conduit **C** of FIG. 7, the length L₁ of element **52** permits the quasi-uniform velocity profile of the entry hydrodynamic field to develop into quasi-laminar flow through the particle-sensitive zone **Z'.** As noted, the degree of laminarity ξ is inversely proportional to the Reynold's number 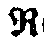 e, i.e., ξ ∝ x'/(R' 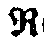 e), where x' is now the distance into conduit **C** from the entry orifice **33'** and R' = D'/2. At the entry **33'** of conduit **C** in FIG. 7, x' = 0, and the flow-velocity profile is quasi-uniform (**a** in FIG. 3); for small particles the annular portion of the conduit cross-section containing the modal particle trajectories lies near the conduit wall **30'.** However, downstream in conduit **C,** at boundary **54** of functional Coulter conduit **10',** x' equals the axial length L₁ of element **52** in FIG. 7, with two significant hydrodynamic results. First, effects due to edge curvature and imperfections are less significant than with the traditional Coulter conduit, since these are smoothed in the developing quasi-laminar flow. Most significantly, in contrast to the prior conduit art, it has been found that the degree of such laminarity may be selected to control the mean and dispersion of the radial positions of modal particle trajectories through the sensitive zone **Z'** of conduit **C.** In FIG. 3 are shown results of volumetric flowrate calculations for L/D = 0.75 (**b**), 1.20 (**c**), and 3.60 (**d**), the peaks (dotted) of which curves represent the modal particle trajectories. Now, if length L₁ of element **52** is selected so that L₁ = 1.2D' = x', the entry modal trajectories through the functional Coulter conduit **10'** occur (**c** in FIG. 3) in the annulus centered at r' = 0.76(D'/2); and if the axial length L' of functional Coulter conduit **10'** is 0.75D', the exit modal trajectories into element **53** can similarly be shown to be at r' = 0.72(D'/2) for the cumulative conduit length x' = (L' + L₁) = 1.95D'. Both entry and exit modal trajectories are consequently well inside the radius r' = 0.85(D'/2) at which the intense electric-field gradients begin, and substantially fewer particles interact with the smaller inhomogeneous fields near wall **30'** to cause skewness in the volumetric distribution (**42** in FIG. 5). Such conduits **C** for which L'/D' > 0.75 produce exit modal trajectories lying inside r' = 0.72(D'/2), and the frequency of anomalous pulses is further decreased. Further, since significant laminarity has developed for L₁ = 3.6D' (**d** in FIG. 3), modal trajectories can be positioned as closely as desired to the limiting laminar position for practical lengths L₁ of region **52,** regardless of the length L' of the functional Coulter conduit **10'.** Thus, through use of differential volumetric flow data such as illustrated in FIG. 3, an appropriate L₁ for the element **52** may be selected so that particle-sensitive zone **Z'** is located in a specific portion of the volumeter conduit **C** to achieve a desired radial position of the modal particle trajectory; further, due to the smaller sensitive zone **Z'** provided by conduit **C**, this important advantage can be achieved for lengths **L'** of functional Coulter conduit **10'** shorter than practicable with traditional Coulter conduits. Alternatively, by selecting an appropriate ratio of length L₁ of element **52** to the length L' of functional Coulter conduit **10'**, the dispersion of the radial positions of the modal trajectories about the mean modal-trajectory position may be optimized. While the length L₂ of element **53** permits further transition toward fully-developed laminar flow and so may decrease turbulence effects in the jetting zone, its primary function is to isolate the exit ambit **32'** of particle-sensitive zone **Z'** so that recirculating particles cannot recurse into it and generate extraneous pulses. However, length L₂ of element **53** of volumeter conduit **C** may be selected to provide a desired relationship between the pressure differential across conduit **C** and the average flow velocity through the sensitive zone **Z'** within conduit **C**.
4. As with the traditional Coulter conduit, particles entering volumeter conduit C on near-axial trajectories, e.g., **AT** in FIG. 2, generate pulses similar to the pulse of FIG. 4A. However, particles entering conduit **C** in the outer extents of the developing converging flow will be accelerated around the conduit edge **33'** in FIG. 7 and through the annulus near wall **30'** of the element **52** where the developing laminar tubular flow serves to straighten the trajectories of such particles, thereby eliminating particle trajectories (e.g., **BT** or **CT** in FIG. 2) curving through the particle-sensitive zone **Z'** of conduit **C** and causing anomalous pulses similar to those in FIGS. 4B or 4C. The number of particles potentially giving rise to such anomalous particle pulses can be further decreased by increasing the length L₁ of element **52,** while the number of pulses similar to **B** can be decreased by increasing the length L' of element **51**. By these combined means, skewness **42** in the volumetric distribution of FIG. 5 may be substantially eliminated. Moreover, since the exit ambit **32'** in FIG. 7 is contained within the portion of conduit **C** bounded by element **53**, decelerating particles that have exited conduit **C** are separated from ambit **32'** by the low-strength field region **57** and cannot be drawn back into the ambit (by, e.g., trajectory DT in FIG. 2) as the particle-suspending liquid recirculates into the toroidal low-pressure region surrounding the exit jet Thus, no extraneous pulses of low amplitude and long duration (e.g., the pulse in FIG. 4D) can be generated, and the secondary volume distribution (**41** in FIG. 5) below the actual sample distribution (**40** in FIG. 5) is eliminated.

In summary, through a characteristic axial variation in axisymmetric wall resistivity, conduit **C** provides novel field and functional properties originating in the selection of materials surrounding conduit **C** and composing volumeter assembly **50**. These advantages substantially originate in the resulting axisymmetric pattern of electrical resistivities through the solid material in which conduit **C** is formed, rather than in any specific combination of element geometry or combinations of particular materials. Specifically, central high-resistivity element **51** of volumeter assembly **50** in FIGS. 6 and 7 defines in conduit **C** a functional Coulter conduit **10'.** The axial dimensions of uninsulated distal elements **52** and **53** of volumeter assembly **50** in FIGS. 6 and 7 can be selected so these lesser-resistivity elements independently function to amend both the electric and hydrodynamic fields in the vicinity of the volumeter conduit **C** by: (i) shaping the electric field resulting from the excitation current so as to substantially confine the particle-sensitive zone **Z'** in FIG. 7 within the physical boundaries of conduit **C** to form functional Coulter conduit **10'**; and (ii) enabling development of quasi-laminar flow through sensitive zone **Z'** so as to significantly increase the proportion of particles per second transiting the substantially homogeneous areas of the sensitive zone. As one advantageous consequence, the isolated sensitive zone **Z'** of functional Coulter conduit **10'** can be made substantially insensitive to particles entering conduit **C** on high-angle trajectories and to particles exiting conduit **C** on recirculating trajectories. As another advantageous consequence, sensitive zone **Z'** of functional Coulter conduit **10'** is substantially smaller than for the traditional Coulter conduit of comparable dimensions; in addition, while the dimensions of the functional Coulter conduit **10'** can be selected substantially as would be those of a traditional Coulter conduit, the range of permissible dimensions is substantially increased. As yet another advantageous consequence, functional Coulter conduit **10'** can be made to demonstrate hydrodynamic characteristics usually associated with the prior-art method of hydrodynamically focused flow. Central to this advantage is the finding that contrary to the prior art, fully-developed laminar flow [corresponding to (**e**) in FiG. 3] is not necessary to provide the desired characteristics thereby obtained, viz., that indeed quasi-laminar flow such as occurs in tubular flows having lesser length-to-diameter ratios [e.g., (**d**) or (**c**) in FIG. 3] may be made to provide these characteristics to a practical degree through static means, if sensitive zone **Z'** can be decoupled from the hydrodynamic length of the conduit. This latter property is enabled through the aforementioned characteristic axial variation in axisymmetric resistivity along the wall of conduit **C.** In addition, the resistivity characteristic directly reduces the radial extent of the high-gradient portions of sensitive zone **Z',** decreasing the degree of laminarity required to achieve a desired degree of volumetric inaccuracy due to pulses on near-wall trajectories. Together, the two consequences of lesser-resistivity elements **52** and **53** permit accuracies in volumetric data comparable to those provided by the best FIG. 1 apparatus, but without the facilitating prior art required by the FIG. 1 apparatus.

It is preferred that volumeter assembly **50** in FIG. 7 comprise elements **51, 52,** and **53,** and this is necessary if particle-sensitive zone **Z'** of conduit **C** is to be substantially symmetric about its axial midpoint. It is preferred that the axial length of both elements **52** and **53** be at least approximately equal to the diameter D' of functional Coulter conduit **10'** so that sensitive zone **Z'** is made substantially independent of the cumulative length of conduit **C,** and this is necessary if the effects of electric and hydrodynamic fields on particle-pulse characteristics are to best be optimized. It is preferred that L'/D' be in the range between 0.2 and 2.5. Generally, respective axial lengths L₁ and L₂ of elements **52** and **53** between one to four times the diameter D' of functional Coulter conduit **10'** are preferred; longer lengths for element **52** may be useful in establishing a desired position of modal particle trajectories through the functional Coulter conduit, while longer lengths for element **53** may be useful in establishing a desired pressure/flow-rate relation for conduit **C.** Axial lengths of elements **52** and **53** somewhat less than the diameter D' of the functional Coulter conduit **10'** may be used if detectability thresholds greater than approximately one percent are acceptable and anomalous pulses are of small concern. Some of the advantages of this invention may be obtained through use of only a single element **52** or **53** arranged at, respectively, the entry or exit of the functional Coulter conduit **10'** in volumeter assembly **C** of FIG. 7. Thus, if the concern is reduction of histogram skewness (**42** in FIG. 5) due to particles transiting the sensitive zone near the conduit wall, element **53** could be omitted, the asymmetric ambit fields of sensitive zone **Z'** then resembling **31'** in FIG. 7 on the entry side and **32** in FIG. 2 on the exit side; element **52** will reduce occurrence of anomalous pulses, but recirculating particles near the exit of the dual-element volumeter assembly will produce extraneous pulses and a low-volume distribution (**41** in FIG. 5). Conversely, if the concern is elimination of the volume distribution (**41** in FIG. 5) due to recirculating particles, element **52** could be omitted and the asymmetric ambit fields of sensitive zone **Z'** will resemble **31** in FIG. 2 on the entry side and **32'** in FIG. 7 on the exit side; element **53** will reduce the occurrence of recirculation pulses, but particles transiting the conduit of the dual-element volumeter assembly near its wall will produce histogram skewness (**42** in FIG. 5) due to anomalous pulses. It is preferred that volumeter assembly **50** comprise elements **51**, **52**, and **53**.

The novel functional properties provided by volumeter conduit **C** in FIG. 6 originate in the aforementioned axial variation in axisymmetric resistivity through the material of which volumeter assembly **50** is constructed. Volumeter conduits incorporating field-amending characteristics may be embodied in numerous dissimilar constructions. Because the resistivity of elements **52** and **53** must be less than that of the particle-suspending medium **M,** because the wall **30'** of conduit **C** must be substantially smooth in the hydrodynamic sense, and because volumeter assembly **50** is desired to be a simple device substantially substitutable for conduit wafer **W** in a FIG. 1 apparatus, it is preferred that volumeter assembly **50** be constructed from solid material. The characterizing attribute of volumeter assembly **50** is the axial variation in the axisymmetric resistivity through the solid material about the axis of the intended transpiercing conduit **C.** The combination of axial variation in effective resistivity and hydrodynamic smoothness in wall **30'** through the solid material composing volumeter assembly **50** is preferably achieved by appropriately inducing suitable resistivity gradients in the material, transpiercing the volumeter assembly at an appropriate site to form a through-hole, and then appropriately finishing the through-hole to generate the hydrodynamically smooth wall **30'** defining conduit **C**. As will be apparent to those skilled in the appropriate arts, volumeter assemblies incorporating the inventive concepts may be embodied by a variety of techniques in a broad range of forms and materials. The aforementioned resistivity variation may be either made to occur through the solid material about the axis of the intended transpiercing conduit **C,** e.g., Embodiment 3, or made to occur by the appropriate selection of the individual solid elements **51**, **52**, and **53** prior to their assembly into volumeter assembly **50,** e.g., Embodiments 2 and 4 though 8. In the latter case it is generally preferable that the elements be conjoined in the aforementioned manner prior to transpiercing, although it may be preferable in the case of large-diameter conduits for the elements to be individually transpierced to a smaller diameter, followed by finishing of the conduit in the conjoined elements to the desired conduit diameter.

Regardless of the implementation, it is most important that the conduit **C** be fluidically continuous and hydrodynamically smooth throughout its length. Due to the need for hydrodynamic smoothness, less preferable are construction methods which rely on either assembly of individual elements prefinished to the final conduit dimensions or use of various mechanical methods for locating and maintaining the elements in their working positions. Although a volumeter assembly **50** may be made to constitute wall **7** in FIG. 6, for constructional reasons conduit **C** is preferably provided in a volumeter assembly **50** of more convenient dimension and form. Similarly, a discoid or cylindrical form is generally preferable, and it is also preferable that the axis of conduit **C** be substantially co-axial with that of volumeter assembly **50.** For ease of manufacture, it is preferred that all transverse surfaces of elements **51, 52,** and **53** be planar, but other design considerations may require that individual elements be made to have other substantially axisymmetric surface geometries, to which any contiguous surfaces are made complementary, e.g., as indicated in FIG. 7. Individual elements **51**, **52**, and **53** can be given a wide variety of geometries, some of which can secondarily augment the field-shaping properties of the conduit assembled therefrom. Within broad limits the external geometry of elements **52** and **53** is not critical to their primary functions and may be adapted to provide specific characteristics of the new volumeter assembly, e.g., flow matching through a trumpet shape for entry element **52** as in Embodiment 6 or causing element **52** or **53** to constitute part of a containment vessel. In addition, the lateral extent of elements **52** and **53** enables yet other design freedom which will be discussed in connection with Embodiments 4 and 5.

The material used to form elements **51**, **52**, and **53** is not critical to their primary functions in volumeter assembly **50** and so may be chosen to provide volumeter characteristics required by a particular application. Numerous implementations of the new volumeter are thus possible, of which some will be better suited for use in certain analyses or with particular particle/liquid systems. Element **51** is required to have an electrical resistivity substantially greater than that of the particle-suspending medium **M** and is preferably made from a dielectric such as ruby, sapphire, alumina, beryllia, synthetic quartz, or other material suited to a given application. However, as discussed in Embodiment 7, element **51** may also be made from a lossy dielectric such as a conductive glass, a conductive ceramic, or a type of conductive polymer or plastic, the resistivity of which is effectively greater than that of the suspending medium **M** but less than that of the aforementioned dielectrics. Elements **52** and **53** are required to have resistivities substantially less than that of the suspending medium **M** and are preferably metals or alloys from the platinum group or conductive ceramics such as certain titanium, tungsten, or silicon carbides. Some applications may benefit from use of metals such as gold, silver, titanium tantalum, tungsten, or their various alloys. Still other applications may benefit from use of nickel, copper, or their alloys, either as a metal or as a cermet comprising one of these metals infiltrated into the microstructure of a ceramic such as alumina. Yet other applications may benefit from use of glassy carbon. Elements **52** and **53** need not be of the same material, and some applications of the new volumeter assembly may benefit from a judicious mismatch in one or more material properties: Generally, the materials are preferably homogeneous, but inhomogeneous materials may be preferable in specific applications. As discussed in Embodiment 5, elements **52** or **53** may be formed from one material and coated or plated with another material in order to provide combinations of material properties unobtainable with the individual materials. Some of the above advantages are achieved through the use of more-resistive materials, as for example ones whose resistivity is less than, but approximates, that of the liquid medium **M** in which the particles are suspended.

It is believed that the concepts of this invention are now sufficiently described that, with the aid of preferred embodiments to follow, those skilled in the relevant arts will be able to fabricate field-amending volumeter assemblies suited to many applications of the Coulter principle. Volumeter assemblies incorporating the field-amending concept may be adapted by prior-art methods to enable simultaneous passage of a suitable suspension of the particles to be characterized and an electrical excitation current through the field-amending conduit. Although the improved conduit may be excited by voltage sources, e.g., as in U.S. Patent No. 2,656,508, use of constant-current excitation sources such as taught in U.S. Patent No. 3,259,842 is preferable; the sources may be direct current, alternating current, or a combination thereof. As indicated in Embodiment 8, the invention is adaptable to other forms of apparatus incorporating the Coulter principle, e.g., ones adapted to incorporate other sensing modalities or to sort particles.

### EMBODIMENT 2

Volumeter assembly **50** in FIG. 7 may be implemented through mechanical assembly and joining of discrete components into a composite solid assembly composed of individual elements having appropriate unequal but substantially uniform individual resistivities. In an embodiment of particular applicability for volumeter assemblies comprising large conduits (e.g., D' ≥ 0.400 mm, approximately), element **51** may be a convenient disc preform of highly resistive ceramic powder which is proportional in axial thickness to the desired conduit length according to the intended manufacturing technique. The axial length L' of element **51** is most preferably 0.50 to 2.5 times D'. Elements **52** and **53** are inset into complementary concavities in element **51**, to conveniently provide the desired axial conduit length L' in a structure of acceptable mechanical strength. Preferably, high-resistivity element **51** is formed of alumina of appropriate grain size and purity, and elements **52** and **53** are made of an appropriate cermet (e.g., alumina infiltrated with nickel or other metal appropriate to the intended application) or one of the conductive ceramics (e.g., titanium carbide). Elements **52** and **53** may be shaped as the spherical segments shown in FIG. 7, or they may be flat discs or other axisymmetric geometries to which the form of the highly resistive central element **51** is adapted. Axial lengths L₁ and L₂ of elements **52** and **53** are most preferably a minimum of four times the intended diameter D' of conduit **C,** and the diameter of these elements at the surface of element **51** preferably is approximately five times the conduit diameter D'. Complementary elements **51**, **52**, and **53** may be molded (e.g., by injection processes), sintered, finished to form if necessary, and joined (e.g., by appropriate brazing methods or through use of appropriate metal-filled adhesives) prior to transpiercing and finishing volumeter assembly **50** to the desired conduit diameter D' and lengths L₁ and L₂ as known in the ceramics-processing or conduit-wafer arts. Preferably, field-amending conduit **C** will have a constant circular cross-section and be co-axial with volumeter assembly **50**. The outer circumferential surface of volumeter assembly **50** may be finished as appropriate. Some combinations of materials may permit unfired preforms to be assembled and sintered to form volumeter assembly **50.**

Elements **52** and **53** of volumeter assembly **50** in FIG. 7 may also be either preformed of one of the metallic conductors and appropriately affixed into concavities in element **51** or formed in place therein, e.g., through use of an appropriate metallic-filled adhesive or paint. For example, discs of 1.0 mm thickness may be prepared from a convenient rod of 99.5% purity alumina having grain size in the 3 to 5 micra range, and centered spherical concavities approximately 0.40 mm deep by 1.0 mm in segment diameter at the surface of the disc are prepared on each side of the discs as is known in the ceramics arts. Each concavity in such resultant element **51** may be either filled with gold-filled adhesive and cured, or given repeated coats of a platinum-filled paint such as used in forming electrodes on glass and fired, according to the appropriate protocol to form a slightly protruding conductive deposit in each concavity. Each disc may then be lapped flat on each surface to form elements **52** and **53,** transpierced through the center of the disc, and the through-holes finished to form hydrodynamically smooth circular conduit **C** having, e.g., D' = 0.200 mm, L' ≅ L₂ ≅ 0.200 mm, and L₁ ≅ 0.400 mm. Care is required to achieve the desired thickness in elements **52** and **53** without creating voids in the conductive deposits or causing the deposits to break away from element **51** during processing.

It is important that field-amending conduit **C** be finished (if not formed) after volumeter assembly is formed, so that wall **30'** defining the conduit is hydrodynamically smooth. In some applications, volumeter conduits resulting from such implementations may benefit from making element **51** from a lossy ceramic as discussed in Embodiment 7, from providing element **52** a shaped inlet as discussed in Embodiment 6, or from coating or plating the conductive preforms for elements **52** and **53** to provide a combination of material properties not available with the base material as discussed in Embodiment 5.

### EMBODIMENT 3

In another embodiment according to FIG. 7, a volumeter assembly **50** of particular applicability for small conduits (e.g., preferably circular, with D' ≤ 0.010 mm, approximately) may be constructed virtually, from a single material, by using suitable doping methods to induce an appropriate resistivity profile. At the site intended for forming the through-hole defining field-amending conduit **C**, the electrical resistivity of an appropriate solid substrate may be made to effectively vary through the thickness thereof, e.g., to define a central delimited region of high electrical resistivity (approximately equal in thickness to the intended conduit diameter) which is contiguously bounded by distal regions of substantially lesser electrical resistivity (approximately equal in thickness to one to three times the intended conduit diameter). For example, suitable impurity doping methods as known in the semiconductor art may be used to create regions **52** and **53** of substantially lesser resistivity which intersect the surfaces on opposite sides of an intrinsic semiconductor (e.g., silicon) substrate **51** to form exposed regions of diameter approximately five times the conduit diameter. The individual volumeter assemblies **50** may be prepared therefrom and provided with an individual hydrodynamically smooth conduit **C** as is known in the relevant arts. Delimiting boundaries **54** and **55** in this embodiment are virtual and may be diffuse, rather than discrete as indicated in FIG. 7, but may be made substantially distinct as is known in the integrated-circuit art. The exposed surfaces of regions **52** and **53** must be electrically uninsulated, and all exposed surfaces of volumeter assembly **50** made to be compatible with the liquid medium used to suspend the particles. This embodiment offers advantages for designs incorporating other electronic functions, e.g., as described in U.S. Patent No. 4,760,328.

### EMBODIMENT 4

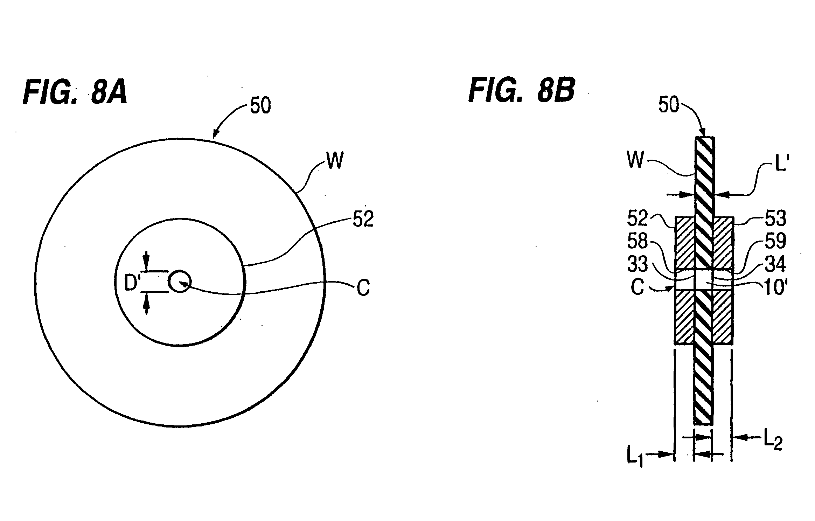

In the above embodiments the lesser resistivity elements or regions of volumeter assembly **50** are incorporated within the volume envelope of high-resistivity element **51.** For mid-range conduit diameters, volumeter assembly **50** may include a pair of electrically conductive collars, each comprising a disc of electrically conductive material having a central opening therein, attached to a dielectric disc of convenient diameter having a central through-hole of suitable dimension. With reference now to FIGS. 8A and 8B, the high-resistivity region of volumeter assembly **50** is preferably a traditional Coulter conduit wafer **W,** i.e., a ruby or sapphire wafer containing a central circular conduit **10'** as described in U.S. Patent Nos. 2,985,830 or 3,771,058. The dimensions of the Coulter conduit wafer **W** and its geometric conduit **10'** may be selected according to the intended application as is known in the art, e.g., appropriate dimensions for leukocyte characterization include an conduit diameter D' = 0.100 mm in a ruby wafer 4.0 mm in outer diameter and L' = 0.075 mm in thickness. The uninsulated lesser-resistivity elements of the field-amending conduit **50** may preferably be circular collars **52** and **53** made of a platinum alloy or a conductive ceramic such as titanium carbide. Each collar **52** or **53** has a respective central opening **58** or **59** which is dimensioned and shaped to precisely conform to the conduit orifices **33** and **34** of the selected Coulter conduit wafer **W**. Collar openings **58** and **59** are congruently arranged with respect to the orifices **33** or **34** of the Coulter conduit, and the collars **52** and **53** are so joined to conduit wafer **W** that the conduit formed by the collar openings **58** and **59** and the Coulter conduit **10'** reliably functions hydrodynamically as one smoothly continuous conduit C. Elements **52** and **53** may be joined to conduit wafer **W** by, e.g., vacuum brazing, commercial epoxy or metal-filled adhesives, use of appropriate glass frits, etc., according to the application. Preferably, field-amending conduit **C** is formed *in situ,* and the respective length L₁ or L₂ of each collar **52** or **53** along the conduit **C** should at least approximate the diameter D' of the traditional Coulter conduit; most preferably, the lengths may be one to three times the diameter of conduit **10'** in Coulter conduit wafer **W,** whereby the electric and hydrodynamic fields of the traditional volumeter conduit are advantageously amended in the manner above noted.

The outer diameter of the collar discs may preferably be at least approximately five times the diameter D' of the traditional Coulter conduit **10',** in which case the electric field in the vicinity of field-amending conduit **C** is substantially like that for Embodiment 2, shown in FIG. 7. However, this dimension is not critical to the primary functions of the collars and may be chosen to satisfy secondary functions, as will be discussed. Although shown as planar, the configuration of the outer face of collars **52** or **53** in FIG. 8B may be any configuration suited to the application of the particular volumeter assembly. Although the collars are shown as of constant cross-section, the internal longitudinal section of either collar **52** or **53** may be chosen to provide a secondary function as discussed in Embodiment 6 or either of the collars **52** or **53** may form part of a mounting device or of a liquid containment vessel. As has been discussed, some of the advantages of this invention may be obtained through the less preferable use of only a single collar arranged at either the entry orifice **33** or exit orifice **34** of the traditional Coulter conduit **10'** in conduit wafer **W**.

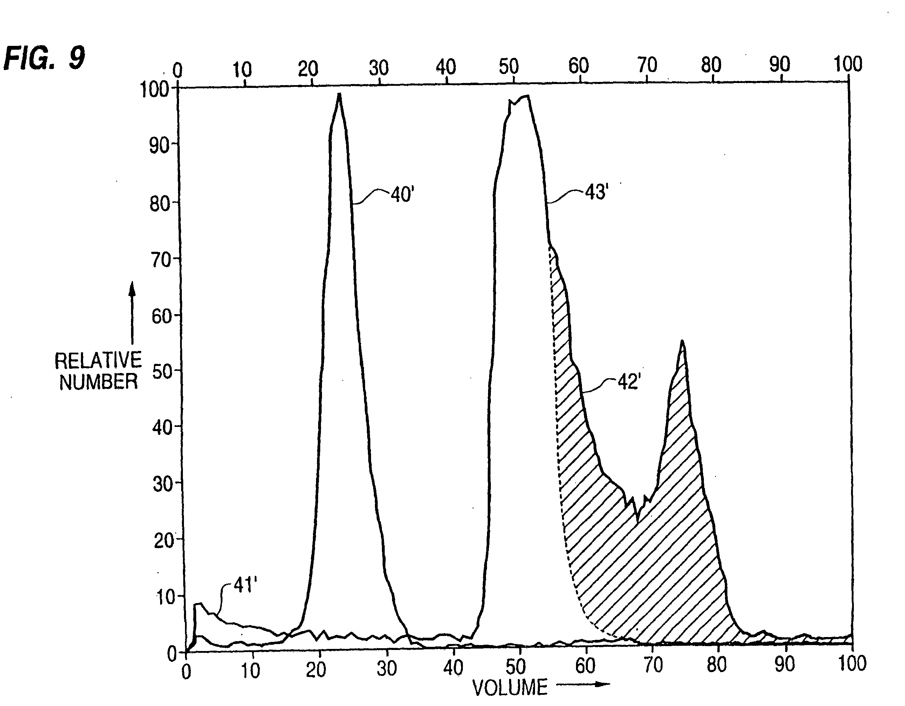

FIG. 9 illustrates the practical benefits obtainable with the volumeter assembly such as shown in FIGS. 8A and 8B. The volumetric data of FIG. 9 were obtained with a Coulter Model ZB Coulter Counter and sample stand, which includes a constant current source but which does not contain subsystems providing either fluidic or post-collection compensation for particle coincidence, recirculating particles, or those transiting the conduit near its wall. Two Coulter aperture tubes were used to acquire particle volumetric data, one according to U.S. Patent No. 2,985,830 and the other a similar tube in which a volumeter assembly according to FIGS. 8A and 8B was substituted for the traditional Coulter wafer. The standard aperture tube comprised a Coulter conduit wafer with a conduit having D = 0.100 mm and L/D = 0.75. The volumeter assembly consisted of discs of platinum 2.5 mm in outer diameter, one 0.20 mm thick (**52** in FIGS. 8A and 8B) and one 0.10 mm thick (**53** in FIG. 8B), centered one per side on a ruby disc (**W** in FIGS. 8A and 8B) 4.0 mm in outer diameter and 0.122 mm in thickness. The platinum discs were attached to the ruby disc with two-part commercial epoxy adhesive according to the manufacturer's instructions. The cured assembly was perforated and finished to form a circular volumeter conduit having a functional Coulter conduit of diameter D' = 0.100 mm and L'/D' = 1.22, as is known in the art of making Coulter wafers. The completed volumeter assembly was mounted with two-part commercial epoxy adhesive onto a second aperture tube (from which the standard conduit wafer had been removed) so that in use the 0.20 mm platinum collar formed the entry side of conduit **C**. Volumetric data for latex particles approximately 0.005 mm in diameter, suspended at high concentration in isotonic saline, were obtained using both aperture tubes with identical instrument settings.

The pulse data from the Model ZB Counter was coupled to a Coulter Model C-1000 Channelyzer which uses pulse-height analysis methods to measure particle volume; the Model C-1000 instrumentation contains pulse-edit circuitry which can be disabled, as was done to collect all data in FIG. 9. In this figure, histogram **43'** is uncorrected data from the standard Coulter aperture tube; the histogram artifact due to recirculating particles (**DT** in FIG. 2) is included in region **41'** with electronic noise, while that due to excessive particle coincidence and particle trajectories such as **BT** or **CT** in FIG. 2 appears as skewness **42'.** Histogram **40'** is data from the identical dense particle suspension obtained with the identical instrument settings as histogram **43',** but with the aperture tube incorporating the volumeter assembly. Volumetric artifacts **41'** and **42'** in histogram **43'** are substantially eliminated in histogram **40'.**

It should be noted that the difference in modal particle volumes between histograms **40'** and **43'** has two components: Firstly, L'/D' = 1.22 for **40',** compared to L/D = 0.75 for **43',** and the larger electrical resistance of the liquid in the volumeter conduit reduces the particle contrast for identical particle size and excitation currents; and secondly, due to the field-shaping effects of the conductive collars, the apparent resistance of a given Coulter conduit wafer used in the field-amending conduit is higher than for the same Coulter conduit wafer used conventionally. As is known in the Coulter art, these effects can be electrically calibrated out so that the modal particle volumes of the two histograms coincide; this was not done in FIG. 9 to keep all experimental parameters identical except the volumeter conduit. When volumetric calibration was independently done for the two volumeter tubes, the non-artifactual portion of histogram **43'** overlay histogram **40'**.

Similar improvement in the quality of volumetric data was also achieved when aperture tubes incorporating other volumeter assemblies according to various embodiments were substituted for the standard Coulter aperture tube in the apparatus described in U.S, Patent Nos. 2,656,508 or 3,259,842. This apparatus was commercialized as the Coulter Model A Coulter Counter or the Coulter Model B Coulter Counter, respectively. The Model A Coulter Counter includes a voltage source to supply the excitation current and a single threshold circuit for sizing particles; it was the first commercial instrument based on the Coulter principle. The Model **B** Coulter Counter includes a current source to supply the excitation current and a dual-threshold circuit for sizing particles. Neither apparatus comprises subsystems providing either fluidic or post-collection compensation for particle coincidence, recirculating particles, or those transiting the conduit near its wall. With aperture tubes including assemblies according to either Embodiments 2 or 4, both a Model A and a Model B Coulter Counter provided near-ideal volumetric histograms (similar to **40'** in FIG. 9) when used with a Coulter Model C-1000 Channelyzer in which the coincidence pulse-edit circuitry was disabled. Similar results were obtained when such field-amending volumeter assemblies were tested with contemporary apparatus in which facilitating art had been disabled.

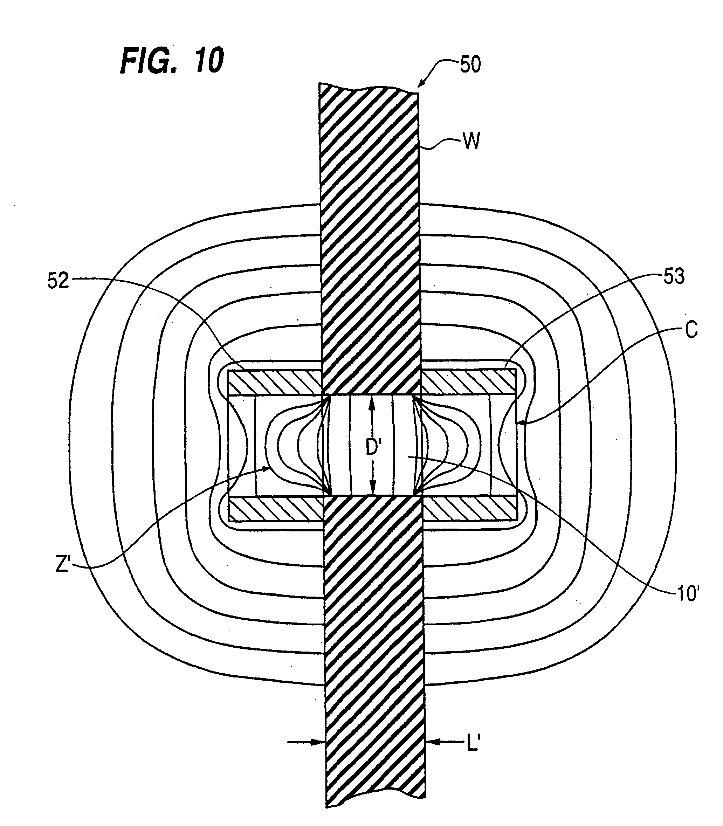

In FIG. 10 is illustrated a volumeter assembly **50** similar to that of FIGS. 8A and 8B, except that conductive collars **52** and **53** have outer diameters only slightly larger (e.g., ≅1.5D') than diameter D' of functional conduit **10'** in conduit wafer **W**. Such tubular collars provide the internal particle-sensitive zone **Z'** and the primary hydrodynamic advantages of the large-diameter elements **52** and **53** in FIGS. 7, 8A, and 8B, but a different distribution of the electric field and less favorable secondary fluidic properties external to field-amending conduit **C**. Consequently, the outer collar diameters may be selected to provide electrical characteristics not available with traditional Coulter conduits. For example, the outer diameters of collars **52** and **53** may be chosen to control electric field uniformity and current density in the particle-suspending liquid near the entry to conduit **C,** in which case it is preferred that the outer diameter of the collars should be at least several times greater than the conduit diameter D', as in FIGS. 7, 8A, and 8B. Alternatively, impedances for DC and AC excitation currents may be decoupled, since the former depends only on the physical dimensions of functional conduit **10'** and the properties of the particle-suspending liquid **M,** whereas the latter also depends on the lateral dimensions of collars **52** and **53** and the dielectric properties of the conduit wafer **W** used to form conduit **C.** Thus, the DC impedance for volumeter assembly **50** in FIGS. 8A and 8B is not significantly different from that of volumeter assembly **50** in FIG. 9, but the AC impedances of the two volumeter assemblies differ substantially, due to the different cross-sectional area of respective collar-pair **52** and **53** contacting conduit wafer **W.**

In some applications, volumeter conduits including such disc or tubular collars may benefit from making element **51** from a lossy ceramic as discussed in Embodiment 7, from providing element **52** a shaped inlet as discussed in Embodiment 6, or from coating or plating the conductive preforms for elements **52** and **53** to provide a combination of material properties not available with the base material as discussed in Embodiment 5.

### EMBODIMENT 5

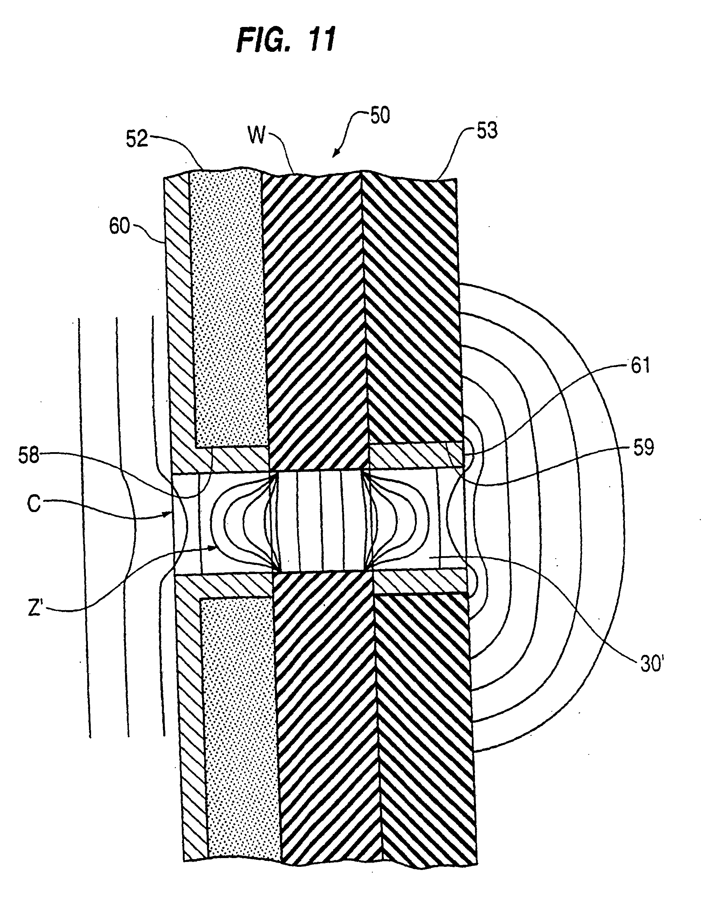

Although the above embodiments comprise low-resistivity elements made of homogeneous conductive materials, in general these elements (e.g., **52** or **53** in FIGS. 7, 8B, and 10) may be formed from one material and coated or plated with another material in order to provide combinations of material properties unobtainable with the individual materials. In FIG. 11 is illustrated a volumeter assembly **50** which incorporates two such collars **52** and **53** attached to Coulter conduit wafer **W** so as to form hydrodynamically smooth conduit **C**. Conductive coating or plating **60** over the outer face and through opening **58** of collar **52** permits it to establish the electric field distribution seen with homogeneous conducting elements **52** or **53** in FIGS. 7 or 8B. Conductive coating or plating **61** through opening **59** of dielectric collar **53** permits it to establish the electric field distribution seen with the tubular homogeneous conducting collars **52** or **53** in FIG. 10, but without the unfavorable secondary hydrodynamic properties. Such coatings or platings **61** and **62** preferably produce an effective resistivity in those portions of wall **30'** surrounded by elements **52** and **53** which is less than that of the suspending medium **M**. Some applications may benefit from metalization (e.g., platinization) of elements **52** and **53**, while others may benefit from similar use of a conductive oxide (e.g., of tin or indium). The resulting sensitive zone **Z'** within field-amending conduit **C** is substantially identical to those in FIGS. 7 and 10, irrespective of the direction of suspension flow through conduit **C** in FIG. 11 or of whether both collars are identically the form of either collar **52** or **53** in FIG. 11. However, the external electric field distributions in the particle-suspending liquid M between the collar faces and excitation electrodes will depend on the area of conductor exposed to the suspending medium.

The AC impedance of conduit **C** in FIG. 11 will depend on the electrical properties of the material used to make the collars, particularly so for collars (e.g., collar **52**) coated or plated on a lateral surface. In principle, the field characteristics required in the field-amending conduit **C** may be provided by such collars made of either a dielectric or a conductive material, i.e., either a conductive or an insulative ceramic plated to form metallic coating **60** in order to provide a particular combination of electrical conductivity and chemical stability. However, the AC impedance of volumeter assembly **50** comprising a pair of collars of the form of collar **52** in FIG. 11 will vary significantly, depending on whether such collars are made from a conductive or insulative material. If the collars are made from a dielectric material, then the AC impedance of conduit C will also depend on the dielectric properties of the material unless a conductive material is used to join the collars to conduit wafer **W**, i.e., brazing or use of a metal-filled adhesive will yield an impedance similar to that given by a homogeneous conductive collar of similar dimensions. In general, such collars may be formed of any material providing the desired combination of electrical and physical properties. Other surfaces of such collars may be selectively coated or plated to provide a selection of electrical characteristics, if at least the wall of collar openings **58** and **59** is made conductive with a suitable coating or plating. The latter structure, in which both collars **52** and **53** are coated or plated only through their respective openings **58** and **59**, is the minimal embodiment of the field-amending concept and may in principle be realized by appropriately coating or plating portions of conduit **10'** in conduit wafer **W** having L'/D' ≥ **3.**

In some applications, volumeter conduits resulting from such implementations may benefit from making element **51** from a lossy ceramic as discussed in Embodiment 7 or from providing element **52** a shaped inlet as discussed in Embodiment 6.

### EMBODIMENT 6

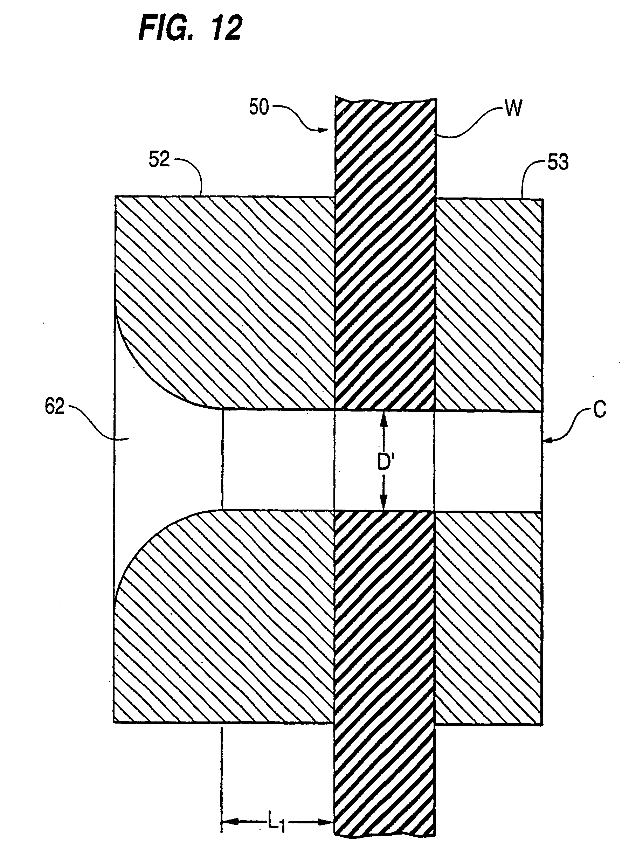

The axial distribution of conduit cross-sections of the collars may be designed to provide desired electric or hydrodynamic distributions in the conduit ambits. For example, the total length L₁ of element **52** in FIGS. 7, 8B or 11 required to attain a given modal particle trajectory may be shortened without loss of hydrodynamic benefits if a radiussed or trumpet-shaped entry region is provided on its entry edge. Such a shaped entry is known in the art to provide improved flow properties through the conduit (U.S. Patent No. 3,739,258), but in prior-art volumeter conduits shaped entries degrade pulse characteristics and are difficult to repeatably produce in the usual dielectric materials. However, in the field-amending conduit pulse characteristics may be made independent of the shaped entry, since the particle-sensitive zone is decoupled from the hydrodynamic length of conduit **C**. Thus, if a straight conduit section of minimum length L₁ = D' is interposed between conduit wafer **W** and the shaped entry **62** in conductive element **52** as shown in volumeter assembly **50** of FIG. 12, the hydrodynamic benefits of the shaped entry may be gained without degrading pulse characteristics. Preferably, shaped entry **62** is made to have a longitudinal profile of exponential shape, but it may be given a toroidal form with radius approximately D'/2 or greater. Such shaped entries are comparatively simple to form in many of the conductive materials useful in making elements **52** or **53**, and due to averaging in the developing laminar flow, imperfections in such shaped entries **62** are less significant than with shaped entries in prior-art conduits formed in dielectric materials. In some applications, volumeter conduits resulting from such implementations may benefit from making element **51** from a lossy ceramic as discussed in Embodiment 7 or from coating or plating the preforms for elements **52** and **53** to provide a combination of material properties not available with the base material as discussed in Embodiment 5.

### EMBODIMENT 7

Although the above embodiments comprise a high-resistivity element (e.g., **51** in FIG. 7 or **W** in FIGS. 8B, 10, 11, and 12) made of an excellent dielectric material, in general the high-resistivity element in any of the preceding embodiments may be made of a lossy dielectric such as a conductive glass, a conductive ceramic, a type of conductive polymer or plastic, or other such material. The resistivity of such lossy dielectric is preferably substantially greater than that of the particle-suspending medium **M** but less than that of, e.g., ruby, alumina, or quartz. An appropriate choice of such material may be useful in further shaping the electric field within the functional Coulter conduit, e.g., **10'** in the FIG. 7 volumeter assembly **50,** to improve field homogeneity. Use of lossy dielectrics in the high-resistivity element may be particularly beneficial in conduits **C** for which L' ≤ D', whereby the poor pulse-amplitude development of such conduits may be improved. Assembly and joining methods must be compatible with the specific lossy dielectric selected for the high-resistivity element. Benefits of lossy dielectrics may also be provided by depositing a thin metallic layer, e.g., gold or nickel, of controlled resistivity through the conduit of a traditional Coulter conduit wafer and incorporating the wafer as wafer **W** in e.g., FIGS. 8B, 11 or 12.

### EMBODIMENT 8

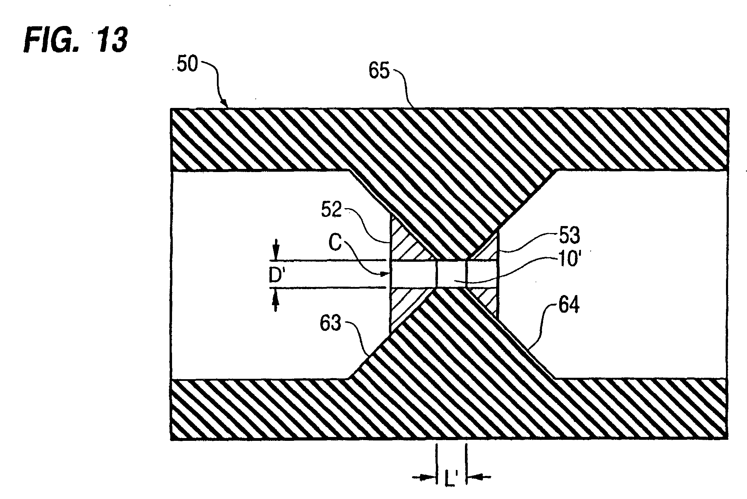

According to the alternative embodiment illustrated in FIG. 13, the volumeter assembly **50** is constructed as a flow cell of the type described in U.S. Patent Nos. 3,628,140 or 4,515,274. Such flow cells are usually made from an optically transparent material such as fused quartz, synthetic silica, sapphire or beryllia and are typically used in apparatus combining the Coulter principle with optical sensing modalities. Such apparatus most commonly includes fluidic subsystems providing hydrodynamically focused flow. Typical volumeter conduits C are of constant circular cross-section, of a diameter D' in the 0.030 mm to 0.200 mm range. Suitable collars **52** and **53** of minimal thickness at least approximating the conduit diameter D' are adapted into conical cups **63** and **64** in the dielectric flow cell 65 as may be consistent with other design considerations. The thicknesses of collars **52** and **53** combine with the length L' of functional conduit **10'** to form hydrodynamically smooth conduit **C.** The distribution of the electric field is substantially similar to that in FIG. 7, with the particle-sensitive zone internal to field-amending conduit **C.** Collars **52** and **53** may be made of a platinum alloy or other appropriate material; if desired, collars **52** and **53** may also be inset into flow cell **65** so that the outer collar surfaces are smoothly continuous with the conical cups **63** or **64.** Joining of elements **52** and **53** to flow cell **65** may be by, e.g., methods normally used to provide electrodes in flow-cell assemblies.

Volumeter assemblies comprising conduits of prismatic cross section, for example as discussed in U.S. Patent No. 4,348,107, may be similarly provided the additional advantages of the invention by appropriately incorporating collars of minimal thickness at least approximating the diagonal of the particular conduit cross section.

It is obvious that hydrodynamically focused flow may be used with field-amending volumeter conduits, either to stabilize the suspension flow through the conduit or to attain the characteristics of its sensitive zone. If hydrodynamically focused flow is used with, e.g., the field-amending flow cell of FIG. 13, element or collar **53** may not be needed since the sheath flow can be made to substantially prevent extraneous pulses from particles on recirculation trajectories. However, in numerous applications the length L₁ and entry shape of element or collar **52** may be selected (as discussed in Embodiment 6) so that acceptable performance can be achieved without use of hydrodynamically focused flow, in which case it is preferred that element or collar **53** be included in volumeter assembly **50**.

### EMBODIMENT 9

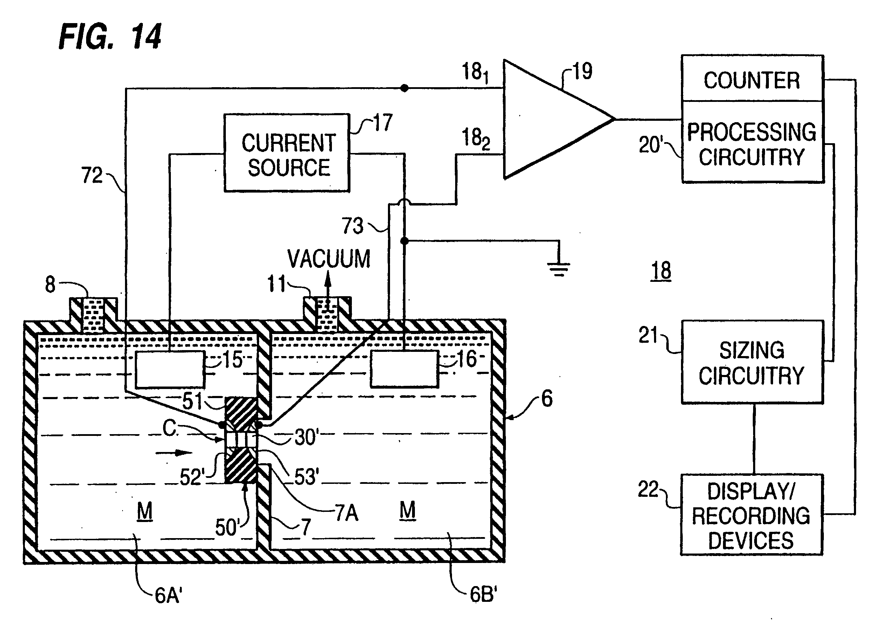

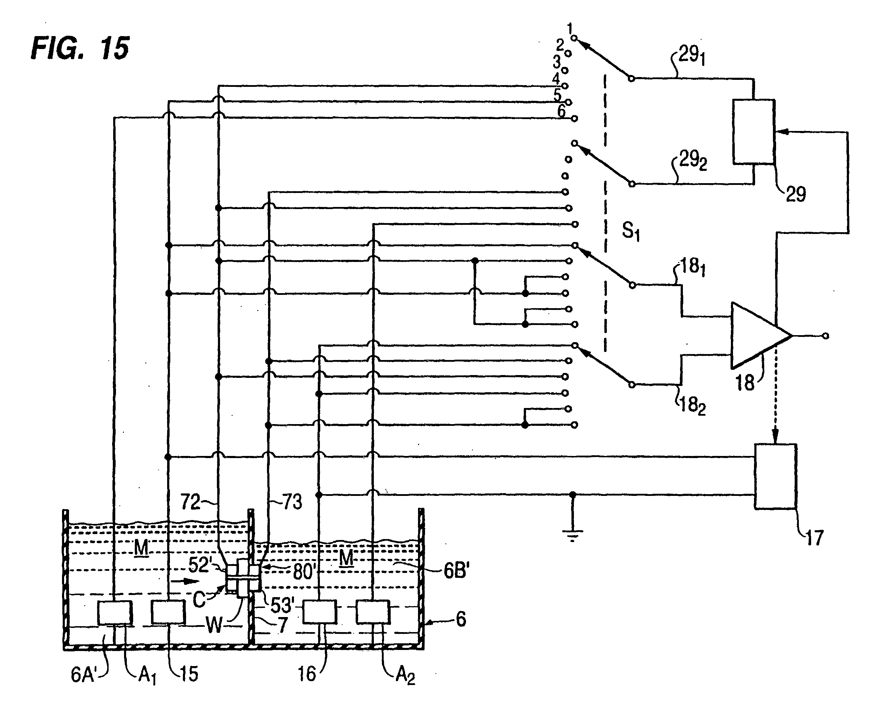

The volumeter assembly **50'** in FIG. 14 is substantially identical to field-amending volumeter assembly **50** in FIG. 6, but, it is distinguished from the FIG. 6 volumeter assembly **50** by electrically conductive paths **72** or **73** provided to at least one of its field-amending elements **52'** or **53'.** When appropriately provided with such conductive paths, derivations of any of the field-amending volumeter embodiments of FIGS. 6 through 13 may be adapted to use as volumeter assembly **50'** in FIG. 14. In each of the figures, the corresponding construction of the previously described embodiments is appropriately provided with electrically conductive paths to at least one of the field-amending elements to form a volumeter assembly **50'**. Although the construction, geometry, or materials each (or all) may differ among the several resulting volumeter assemblies **50'**, all provide substantially the same novel properties in electric and hydrodynamic fields in the vicinity of conduit **C**. According to these embodiments, all the volumeter assemblies **50'** are adapted to apparatus operating according to the Coulter principle and requiring more than two functional terminals for practical implementation. Examples include such apparatus adapted to characterization methods incorporating potential sensing and active control of field intensities in one or more portions of the particle suspension passing through volumeter conduit **C**. Apparatus examples comprising such volumeter assemblies are illustrated in FIG. 15 and discussed in Embodiments 10 through 14. To indicate the substantial functional equivalence of the several volumeter embodiments, volumeter assembly **50'** of FIG. 14 has been replaced in FIG. 15 by volumeter assembly **80'** having a single sensitive zone.

One example of the electrically conductive paths **72** and **73** comprises small-gauge insulated wire connected to elements **52'** and **53'** with conductive paint or low temperature solder and to the inputs **18**_{**1**} and **18**_{**2**} of aforesaid sensing circuitry by appropriate conventional methods. Field-amending elements **52'** and **53'** of the FIG. 14 embodiment thus combine the functionality of the FIG. 7 field-amending structure with that of prior-art integrated sensing electrodes.

Electrically conductive paths **72** and **73** may be formed by a variety of methods known in the arts and are preferred to be insulated. It is not required that both field-amending elements **52'** and **53'** be provided a respective conductive path **72** or **73**, nor is it required that both said field-amending elements be present, in a given embodiment of volumeter assemblies **50'** according to the invention. It is important that the area around the junction of conductive path **72** or **73** to respective field-amending element **52'** or **53'** be thoroughly protected from any potential adverse effects of suspending medium **M**, particularly corrosion. Preferably, the complete volumeter assembly **50'** is caused to have a protective envelope, e.g. by potting in an insulating epoxy so that conduit **C** is unaffected. A more substantial protective envelope may be provided as is known in the electronic art, e.g., masking the area of elements **52'** and **53'** surrounding the openings of conduit **C** it is desired to be uninsulated, sputter-coating the assembly with an appropriate thickness of dielectric material such as silicon dioxide, and removing the material over the areas of the field-amending elements to be left uninsulated.

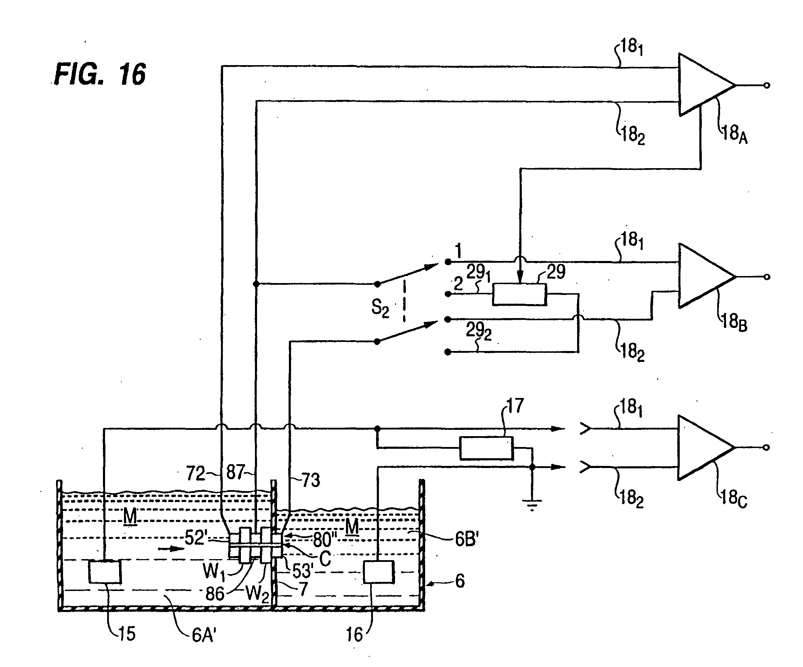

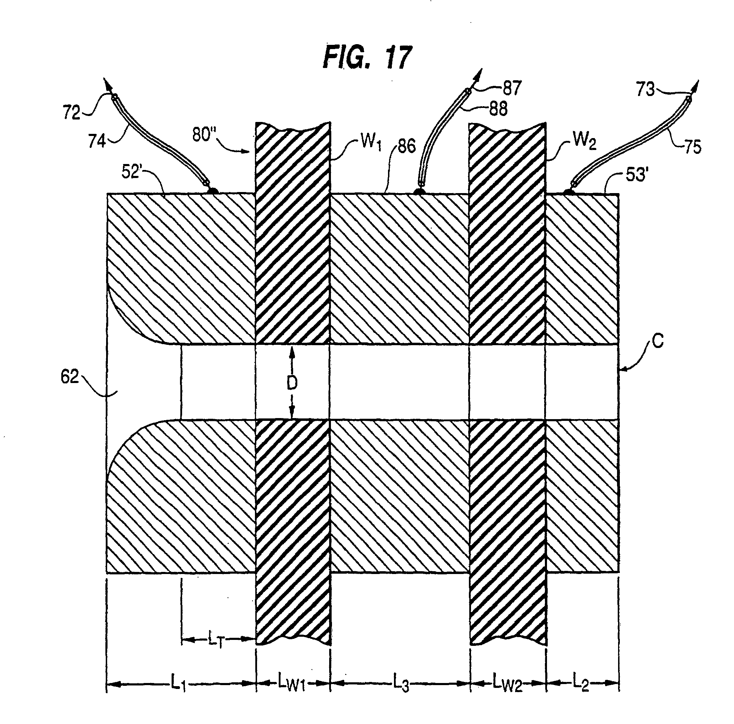

Also in accordance with the present invention, implementations of a second type of the FIG. 14 apparatus are characterized by volumeter assemblies having multiple sensitive zones. To illustrate, the FIG. 14 volumeter assembly **50'** may be appropriately augmented by at least one pair of further FIG. 14 elements **52'** and **51** or **51** and **53'**, each added field-amending element being provided an operative electrical connection whereby it may also function as an electrode. As discussed in Embodiment 15, such integrated tandem-conduit forms of volumeter assembly **50'** thus comprise at least two sensitive zones, each preferably similar to **Z'** in FIG. 7, and are adapted to apparatus providing time-sequential characterizations or operations on particles passing through conduit **C** thereof. Apparatus examples comprising such volumeter assemblies are illustrated in FIG. 17 and discussed in Embodiments 17 and 18. To indicate the functional similarity of the different volumeter embodiments, volumeter assembly **50'** of FIG. 14 has been replaced in FIG. 16 by volumeter assembly **80"** having a double sensitive zone.

In the preceding discussion it has been indicated that there are two types of apparatus according to the invention. Volumeter assemblies **50'** having a single sensitive zone are used in the first type of apparatus, and the structures in FIGS. 8A and **88**, 11, or 12 are most preferred. Operational characteristics of the first implementational type (FIG. 15) depend upon use made of discrete electrodes, the type of electrical circuitry connected to each conductive path to field-amending elements of volumeter assembly **50'**, and whether electrical circuitry is connected to more than one such conductive path. Operational characteristics of a second implementational type (FIG. 16) depend not only upon the aforementioned factors, but also upon the number of additional sensitive zones integrated into volumeter assembly **50'**. See, for example, the FIG. 17 structure and the subsequent discussion related thereto. As will be apparent to those skilled in the art, numerous configurations of novel apparatus incorporating the Coulter principle are thus possible according to the invention. To illustrate the range of apparatus to which volumeter assemblies of the present invention may be adapted, **volumeter assembly 80** will represent any volumeter assembly incorporating the use of field-amending elements as electrodes. In view of the foregoing discussion and to facilitate clarity, with reference then to FIGS. 14-16, henceforth the four following conventions are stipulated:
1. Any electrode located more than one conduit diameter D from the nearest functional Coulter conduit in volumeter assembly **80** is a **discrete electrode.** Such electrodes may be variously disposed within **6A'** and **6B'** of FIGS. 14, 15, or 16 or connected thereto by liquid columns, including locations within or on volumeter assembly **80** greater than conduit diameter D from the nearest functional Coulter conduit therein. Such electrodes include, but are not limited to, any used to supply excitation current to volumeter conduit **C** (e.g., **15** and **16** in FIGS. 14-16) which are preferred to be located at appreciable distance from the conduit **C.** Such electrodes may be auxiliary ones (i.e., **A**_{**1**} and **A**_{**2**} in FIG. 15) used to obtain signals or supply current related to aspects of apparatus function secondary to sensing and characterization of particles by the Coulter principle (e.g., U.S. Patent No. 3,944,917).
2. The novelty of the present invention does not originate substantially in the specific types of electrical circuitry which may be operatively connected to any field-amending element associated with a particular volumeter assembly **80**. Thus, in FIGS. 15 and 16, **sensing circuitry 18** comprises such appropriate forms and combinations of FIG. 14 prior-art circuitry **19, 20',** and **21** and prior-art devices **22** as one skilled in the Coulter art would use to efficiently achieve the intent of a specified connection via inputs **18**_{**1**} and **18**_{**2**}. The set **18** of conventional circuitry **19, 20',** and **21** operating to detect, sense, monitor, and record particle count and characteristic data may be required in a specific electrode connection, whereas in other electrode connections display/recording devices **22** or sizing circuitry **21** may not be required. It is preferred that AC-coupled sensing circuit **19** have low input impedance compared to the conduit impedance when connected to excitation electrodes **15** and **16,** but high input impedance when connected between any other pair of electrodes; in the latter case it may also be preferable that sensing circuitry **19** be a differential-input circuit. In some instances, it may be preferable that processing circuitry **20'** comprise specialized pulse-processing algorithms or techniques known in the prior art.
3. Some forms of the invention in FIG. 15 require multiples of said sensing circuitry **18** and/or prior-art floating source **29** of effector current, as will be apparent to one skilled in the Coulter art. For illustrative clarity, it is stipulated that the single element of sensing circuitry **18** or source **29** shown in FIG. 15 indicates the multiplicity of such elements needed to achieve the intent of any stated connection or combination of connections. As appropriate, DC-coupled sensing circuitry or effector current sources are denoted as sensing circuitry **18'** or current source **29'**, respectively.
4. FIGS. 15 and 16 differ from FIG. 6 in two details: a) Respective volumeter assemblies **80'** and **80"** in FIGS. 15 or 16 are shown as sealing an opening corresponding to opening **7A** of FIG. 14, so that conduit **C** forms the only operative electrical and fluidic connection between compartments **6A'** and **6B'** of vessel **6**, without the opening being specifically indicated in said figures; and b) Hydrostatic pressure, indicated by the difference in levels of liquid **M** in compartments **6A'** and **6B'** in FIGS. 15 and 16, is used to move particle suspension through conduit **C** of respective volumeter assembly **80'** or **80",** rather than the vacuum applied to port **11** in FIG. 14. It is stipulated that said differences, introduced for illustrative clarity, do not detract from the operability of the embodiments schematized in FIGS. 15 and 16.

Therefore, with reference now to FIG. 15 and with the aforesaid stipulations in mind, in implementations of the first type of apparatus according to the invention, either at least one input **18**_{**1**} or **18**_{**2**} of one sensing circuitry **18** or at least one output **29**_{**1**} or **29**_{**2**} of one effector current source **29** is operatively connected to at least one field-amending element **52'** or **53'** via an electrically conductive path (e.g., **72** or **73**) provided to said field-amending elements in volumeter assembly **80'** having a single sensitive zone. The other said input of a sensing circuitry **18** or output of an effector current source **29** may be operatively connected to either the other field-amending element **53'** or **52'** of volumeter assembly **80'** via the other electrically conductive path (e.g., **73** or **72**) thereto or to a discrete electrode (e.g., **A**_{**1**} or **15;** or **16** or **A**_{**2**}, respectively). The possible connection modes for said inputs of one sensing circuitry or outputs of one effector current source are summarized in Table 1, together with resulting operational characteristics for both AC-coupled (**18** and **29**) and DC-coupled (**18'** and **29'**) circuitry. As indicated in the first through sixth rows of Table 1, a sensing circuitry **18** may in principle to connected between any aforementioned pair of electrodes, of which connections those of Modes A through C are less preferable.

In some implementations of the first type, at least one source **29** of effector current can, by operative connection of outputs **29**_{**1**} and **29**_{**2**} to various pairs of electrodes, function to actively modify in at least a part of the particle suspension, the local intensity of the nominal electric field established between discrete electrodes **15** and **16** by current source **17**. The portion of particle suspension affected depends upon the electrode pair chosen for connection of current source **29**. As indicated in the seventh through twelfth rows of Table 1, a current source **29** may in principle also be connected between any aforementioned pair of electrodes, of which connections those of Modes D through F are less preferable. It is important that any source **29** not introduce noise into the apparatus of FIG. 14. It is preferable that any source **29** have a high inactive impedance, to minimize disturbing effects on the nominal electric field within conduit **C.** In general, connections of current source **29** to field-amending elements **52'** or **53'** (via conductive paths **72** or **73**) create a potential for electrochemical artifacts (e.g., bubble generation), the effects of which must be considered when planning characterization methods based on such connections. Source **29** may be operatively connected to a sensing circuitry **18** and activated in response to a signal developed thereby in response to the passage of a particular particle through conduit C; sensing circuitry **18** used in such implementations must be designed to disregard or accommodate any significant artifacts introduced by subsequent operation of current source **29**. Current source **29** may also be activated independently of particle presence or characteristics, e.g., as may be required in a manual cleaning application.

Generally, connection modes requiring sensing (or passage of current from current source **29**) between a discrete electrode and either field-amending element **52'** or **53'** through conduit **C** are least preferable (e.g., Modes B and C or E and F in Table 1).

Multiple sensing circuitry **18** or **18'** (or effector current sources **29** or **29'**) may also be used, to provide multiple simultaneous connections to various combinations of discrete electrodes (e.g., **15**, **16**, **A**_{**1**}, or **A**_{**2**}) and electrically conductive paths (e.g., **72** and/or **73**) to field-amending elements of volumeter assembly **80'**, according to desired operational characteristics.

In FIG. 15, a six-position, four-pole selector switch **S**_{**1**} is used to provide the six numbered connective modes of Table 1 in an illustrative apparatus according to the invention. Although it may be advantageous to provide two or more such connections in practical apparatus, the intent of FIG. 15 is not to suggest that such combinations are necessary in demonstrating inventive novelty. Rather, the intent of FIG. 15 is to illustrate the flexibility of configuration and versatility of application possible with apparatus according to the invention. Several preferred connection modes are discussed in Embodiments 10 through 14, the first two of which do not require an effector current source **29.**

### EMBODIMENT 10

If either one input **18**_{**1**} or **18**_{**2**} of a first sensing circuitry **18** or one output **29**_{**1**} or **29**_{**2**} of an effector source **29** is operatively connected to at least one of field-amending elements **52'** or **53'** in volumeter assembly **80'**, inputs **18**_{**1**} and **18**_{**2**} of a second sensing circuitry **18** may be operatively connected to discrete electrodes **15** and **16** according to the invention. Thus, in another preferred sensing embodiment corresponding to Mode 21 in Table 1, inputs **18**_{**1**} and **18**_{**2**} of a first sensing circuitry **18** are connected via electrically conductive paths **72** and **73** to field-amending elements **52'** and **53'** in volumeter assembly **80',** and inputs **18**_{**1**} and **18**_{**2**} of a second sensing circuitry **18** are connected to pairs of discrete electrodes such as **15** and **16, A**_{**1**} and **A**_{**2**}, **15** and **A**_{**2**}, or **A**_{**1**} and **16.** The two sensing circuitry operate simultaneously, and particles transiting conduit **C** produce a pulse stream via each sensing circuitry **18.** Each of the two particle pulse-streams represent one of the aforementioned forms of improved Coulter apparatus, whereby comparative measurements on the same particles may be made by the two methods. There is no requirement that each sensing circuitry **18** be responsive in a given frequency band, i.e., one may respond to a DC component and the other to a radio-frequency component of the excitation current provided by current source **17**.

Although similar apparatus configurations are described in the prior-art apparatus does not comprise field-amending volumeter assembly **80'** of the present invention. Consequently, it could not afford the aforementioned functional or commercial advantages deriving therefrom.

### EMBODIMENT 11

In a detection embodiment, inputs **18**_{**1**} and **18**_{**2**} of a sensing circuitry **18** in FIG. 15 are operatively connected (via electrically conductive path **72**) to field-amending element **52'** of volumeter assembly **80'** and to discrete electrode **15**. This embodiment corresponds to Mode 3 in Table 1 and Position 3 of switch **S**_{**1**} in FIG. 15. For said connection, particles approaching conduit C generate a signal which permits detection of particle entry into conduit **C;** while such signal does not permit characterization of the particle, it can facilitate analytic processes applied to a pulse stream, e.g., by providing an anticipatory timing signal. Thus, in Mode **23** in Table 1, a first sensing circuitry **18** connected in the aforementioned manner may trigger a sampling circuit so as to optimally sample the pulse sensed by a second sensing circuitry **18**, inputs **18**_{**1**} and **18**_{**2**} of which are operatively connected (via conductive paths **72** and **73**) to field-amending elements **52'** and **53'** in volumeter assembly **80'.**

Such anticipatory signals are known in the art, and the novel apparatus of this embodiment is similar in configuration to one described by Feier (aforementioned U.S. Patent No. 4,161,690). However, the Feier apparatus comprises a conduit structure which is difficult to duplicate and which affords no field-amending properties. Consequently, for typical conduit dimensions the coincidence volume of the functional conduit in the prior-art structure is substantially the same as for the FIG. 2 Coulter conduit **10,** or about three times that of conduit **C** of the invention. Further, because there is no field-amending element in the prior-art structure, hydrodynamic flow through its conduit is quasi-uniform, compared to quasi-laminar in conduit **C**, with attendant skewness in the volumetric distribution. Finally, recirculating particles may further degrade volumetric accuracy, since they have access to the exit ambit field. Consequently, the prior-art apparatus does not afford the aforementioned functional or commercial advantages deriving from the present invention.

The analogous reverse connection, Mode A in Table 1, may be useful in indicating the exiting rate of a particle or the potential of field-amending element **53'** relative to a discrete electrode (e.g., that of **72** relative to **16** or **A**_{**2**}), but is less preferable than Modes 1 through 3. Because of the composite nature of signals given by connective Modes B and C, the latter are least preferable of the six possible connections of a sensing circuitry **18**.

In some forms of the invention it is preferred that a current source **29** be operatively connected to one of various pairs of electrodes disposed in compartments **6A'** and **6B'** of vessel **6** in FIG. 14, including excitation discrete electrodes **15** and **16**, auxiliary discrete electrodes **A**_{**1**} and **A**_{**2**}, and those formed by field-amending elements **52'** and **53'**. It may be preferred that second current source **29** be operatively connected to a portion of sensing circuitry **18** to be responsive to a particular aspect of particle characteristics or apparatus operation.

### EMBODIMENT 12

In a preferred active embodiment, particles passing through conduit **C** of integrated volumeter assembly **80'** in FIG. 15 are sensed by sensing circuitry **18** connected as described above, and characteristics of the signal thereby provided are used to activate effector source **29** via an operative connection thereto. The outputs **29**_{**1**} and **29**_{**2**} of source **29** are operatively connected to auxiliary discrete electrodes **A**_{**1**} and **A**_{**2**} immersed in medium **M**, whereby the nominal electric field in functional conduit **10'** is modified or controlled in a desired manner. The resulting embodiment corresponds to Mode 6 in Table 1 and Position 6 of switch **S**_{**1**} in FIG. 15. Particles transiting conduit **C** of volumeter assembly **50'** can be sensed with the aforementioned benefits and advantages.

In an AC-coupled form of the embodiment, current source **29** and auxiliary discrete electrodes **A**_{**1**} and **A**_{**2**} may be optimized to the specific application. The connection of a pulse current source **29** to discrete electrodes **A**_{**1**} and **A**_{**2**} permits improved dynamic response in the field-modification loop, independently of the characteristics of excitation current source **17** and excitation electrodes **15** and **16.** Further improvement is facilitated by two functional aspects of volumeter assembly **80'**, permitting more flexibility in operational protocols. Firstly, the small size of field-amending elements **52'** and **53'** reduce the input capacity seen by sensing circuitry **18**, thereby improving dynamic response in the sensed particle characteristic. Secondly, the improved resolution and accuracy in particle characterization provided through the function of the field-amending elements permits more precise definition of the criteria by which current source **29** is activated. Among other uses, this embodiment may be adapted to porate biological cells, determine cell membrane breakdown, or estimate cell fragility as is known in the two-terminal art (e.g., U.S. Patent No. 4,220,916), but without the dynamic limitations demonstrated in the prior-art apparatus.

In an alternative form of the embodiment, DC-coupled sensing circuitry **18'** may be connected in the aforementioned manner, whereby the electrical resistance of conduit **C** may be monitored, and current source 17 is made operatively responsive to a control signal from sensing circuitry **18',** as indicated by the dashed connective line in FIG. 15. Thus, according to Mode 4 in Table 1, the nominal excitation current between discrete electrodes **15** and **16** may be controlled in a desired manner. If the operative connection constitutes a linear feedback circuit, such forms of the new apparatus can accommodate changes in resistivity of the suspending medium **M** or substitution of conduit **C** of another geometry (e.g., aforementioned U.S. Patent Nos. 4,019,134 or 4,224,567). In contrast to prior-art implementations of such compensation methods, volumetric characterizations of particles of improved accuracy can be provided, due to the field-amending elements and conduit **C** of volumeter assembly **80'**.

### EMBODIMENT 13

Some applications of the cell poration and breakdown art many benefit from the fixed relationship between the field-amending elements in said volumeter assembly **80',** which can provide more precise control over the electric field to which the selected cells are subjected. In this embodiment, inputs **18**_{**1**} and **18**_{**2**} of a sensing circuitry **18** in FIG. 15 are operatively connected between discrete electrodes **15** and **16,** and outputs **29**_{**1**} and **29**_{**2**} of pulse source **29** are operatively connected to field-amending elements **52'** and **53'** in volumeter assembly **80'** via electrically conductive paths **72** and **73.** This embodiment demonstrates one use of Mode 4 in Table 1, as illustrated by Position **4** of switch **S**_{**1**} in FIG. 15.

The characteristics of particles transiting conduit **C** are sensed and processed by sensing circuitry **18**, and current source **29** is operatively connected to sensing circuitry **18.** Current source **29** is responsive to a portion of the processing capability therein, e.g., a discriminant function or algorithm, and is activated according to one or more selected cell characteristics as determined by processing elements of sensing circuitry **18.** In one example, the particles are biological cells suspended in medium **M** containing a fluorescent dye; cells having a selected characteristic as determined by sensing circuitry **18** and porated by response of source **29** can be loaded with sufficient dye to enable their subsequent optical detection by known methods. As known in the art, appropriate pulse voltages can leave the cells viable. In addition to the improved volumetric accuracy provided in the characterization data, the larger surface of field-amending elements **52'** and **53'** (in comparison to thin electrodes in prior-art integrated conduit structures) may enable greater poration currents before onset of electrochemical artifacts. However, surface area of the field-amending elements is sufficiently smaller than that of excitation electrodes **15** and **16** that transient response of effector-current waveforms can be significantly faster. If repeatability of the poration or breakdown condition is critical, hydrodynamically focused flow may further confine suspension flow through conduit **C**.

If pulse voltage is appropriately increased, this embodiment can be used to cause cell disruption by dielectric breakdown, rather than comparatively benign poration.

### EMBODIMENT 14

In a preferred cleaning embodiment, corresponding to Mode 5 in Table 1 and Position 5 of switch **S**_{**1**} in FIG. 15, outputs **29**_{**1**} and **29**_{**2**} of a source **29** are operatively connected to a discrete electrode, e.g., discrete electrode **15**, and (via electrically conductive path **72**) to field-amending element **52'** in volumeter assembly **80'**. Activation of current source **29** may be in response to faulty pulse data from sensing circuitry 18, provided via an operative connection therebetween, or by manual means. For example, in U.S. patent Nos. 4,412,175 to F. D. Maynarez; 4,450,435 to B. D. James; and 4,775,833 to E. Roos and Wallace H. Coulter, methods are shown of deriving an alarm signal responsive to a dirty or clogged conduit, whereby a pulse generator forming source **29** may be activated (i.e., U.S. Patent No. 3,963,984 to Wallace H. Coulter). In this embodiment, cleaning current is directed to the surface most likely to accumulate debris, so cleaning action occurs at the site of greatest potential debris accumulation, without passage of a cleaning current through conduit **C.** This contrasts to prior-art cleaning methods, wherein a high-density electrical current passes through the conduit, with a significant potential for damaging the conduit structure without fully cleaning the conduit.

Some benefits of the invention may be obtained if field-amending element **53'** and electrically conductive path 73 are omitted from volumeter assembly **80'**.

### EMBODIMENT 15

In FIG. 17 is illustrated a volumeter assembly **80"** comprising two Coulter wafers **W**_{**1**} and **W**_{**2**} to each of which is fixed a respective field-amending collar **52'** or **53'** and the two of which are separated by field-amending element **86** of a suitable conductive material. Materials of the individual elements may be any appropriate to the application. It is generally preferable that the several field-amending collars **52'**, **86,** and **53'** be of the same conductive material.

The respective axial extents L_{W1} and L_{W2} of the two Coulter wafers **W**_{**1**} and **W**_{**2**} are not required to be equal, but are preferred to be between 0.3 and 2.5 times the diameter D of conduit **C.** The axial extents L₁ and L₂ of respective collars **52'** and **53'** are selected as for preceding embodiments and are preferred to be between one and four times the diameter D of conduit **C.** The axial extent L₃ of collar **86** is preferred to be one to two times the diameter D of conduit **C,** but timing or other considerations may require L₃ to be several times the conduit diameter D.

Shaped conduit entry **62** may be beneficial in demanding applications and may take any of the variations discussed in Embodiment 6; in general, L_{T} ≥ D. The needs of many applications, however, can be met by flat collars (i.e., collars of the form of **53'** or **86** may be substituted for shaped-entry collar **52'**), and this form is preferred for ease of manufacture.

Volumeter assembly **80"** may be assembled by joining two subassemblies, one made according to Embodiment 4 (e.g., field-amending collar **52'**; Coulter wafer **W**_{**1**}, and collar **86**) and the other similar, but less one field-amending collar (e.g., Coulter wafer **W**_{**2**} and field-amending collar **53'**). Many practical difficulties in fabrication can be avoided through the use of undersize conduits in the two subassemblies and an appropriate wire to align the two conduits during assembly, with finishing of conduit **C** in the complete volumeter assembly to its final diameter D as described in Embodiment 4. Electrically conductive paths **72, 87,** and **73** to the respective field-amending collars **52'**, **86**, or **53'** may be provided by small insulated wires connected (e.g., with conductive paint or epoxy) to the outer diameters of said collars, as shown in FIG. 17; the electrical junctions may be insulated and protected by beading in the angle between each Coulter wafer **W**_{**2**} or **W**_{**2**} and said collars with an appropriate insulative epoxy (not shown).

It is also possible to assemble in the aforementioned manner two subassemblies made according to Embodiment 4, but less one field-amending collar (e.g., Coulter wafer **W**_{**1**} and field-amending collar **86;** Coulter wafer **W**_{**2**} and field-amending collar **53'**), so that a less-preferred volumeter assembly **80"** comprises equal numbers of field-amending elements and Coulter wafers, but with the limitations discussed in connection with the latter embodiment.

### EMBODIMENT 16

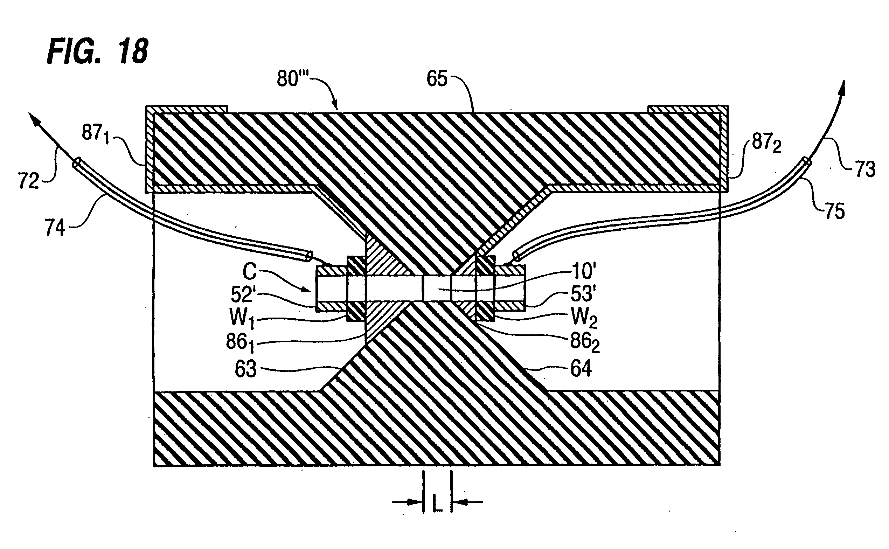

According to another embodiment, a flow cell of the type described in Embodiment 8 is provided additional sensitive zones as described in Embodiment 15. Thus, in FIG. 18 an appropriate subassembly according to Embodiment 8 (Coulter wafer **W**_{**1**} and field-amending collar **52'** or similar pair **W**_{**2**} and **53'**) is positioned with the aid of an alignment wire over both openings of conduit **C** (i.e., the entry opening of collar **52'** and the exit opening of collar **53'** of flow cell **65**), with the Coulter wafer **W**_{**1**} or **W**_{**2**} of each respective subassembly against field-amending collar **52'** or **53'** of volumeter assembly **50'.**

Thus, external field-amending collars of the FIG. 13 structure are converted into internal ones in the resulting FIG. 18 structure, wherein field-amending collars **86**_{**1**} and **86**_{**2**} (with respective electrically conductive paths **87**_{**1**} and **87**_{**2**} thereto) correspond to FIG. 18 field-amending collars **52'** and **53'** (with respective electrically conductive paths **72** and **73** thereto). The axial extents of field-amending collars **86**_{**1**} and **86**_{**2**} may be chosen according to the needs of the application, but are preferred to be in the range between one and four times the diameter D of conduit **C**.

It is preferred that said subassemblies (**W**_{**1**} and **52'** or **W**_{**2**} and **53**') comprise electrically conductive paths **72** and **73** to respective field-amending elements **52'** or **53'**. Conductive paths **72** and **73** may comprise small insulated wires, as shown in FIG. 14, but may more preferably be metallic lands deposited on the surface of the dielectric elements shown in the figure, i.e., similar to conductive paths **87**_{**1**} and **87**_{**2**}. Preferably each said subassembly is sealed into position with insulative epoxy (not shown in FIG. 14). Care should be taken to insulate appropriate portions of respective electrically conductive path **72** or **73** and field-amending collars **52'** and **53'**, as well as to fill in regions around the subassemblies likely to cause zones of stagnant flow. Electrically conductive paths **72** and **73** and insulation thereof should be arranged with regard to any fluidic or optical interference. Once the epoxy has cured, the alignment wire is removed and composite conduit **C** polished, to ensure hydrodynamic smoothness within the conduit and proper electrical contact of the field-amending collars with suspending medium **M.** In this form volumeter assembly **80'''** is provided two additional sensitive zones, one on either side of the original one between field-amending collars **86**_{**1**} and **86**_{**2**}. It is not required than Coulter wafer(s) **W** have the same axial extent L as the conduit **10'** through flow cell **65**.

In other forms, the volumeter assembly is provided only a second sensitive zone, formed either between either field-amending collar **86**_{**1**} or **86**_{**2**} in FIG. 14 and field-amending collar **52'** or **53'** of the added subassembly.

With reference now to FIGS. 16, 13, and 14 and with the aforesaid stipulations in mind, in implementations of the second type of apparatus according to the invention, via the respective electrically conductive path (**72**; **87**_{**1**} ..., or **87**_{**(n-1)**}; **73**) provided to field-amending elements (**52'**; **86**_{**1**} ..., or **86**_{**(n-1)**}; **53'**), either at least one input **18**_{**1**} or **18**_{**2**} of one sensing circuitry **18** or at least one output **29**_{**1**} or **29**_{**2**} of one effector current source **29** is operatively connected to at least one field-amending element in volumeter assembly **80** having more than one sensitive zone. The other said input of sensing circuitry **18** or output of effector current source **29** may be operatively connected in a corresponding manner to any other such field-amending element of volumeter assembly **80** or to a discrete electrode (e.g., **15** or **16;** auxiliary discrete electrodes such as **A**_{**1**} or **A**_{**2**} of FIG. 15 may also be used, but are not shown in FIG. 16). These general comments illustrate the further variety of apparatus possible according to the invention. Possible connection modes for said inputs of one sensing circuitry **18** or outputs of one effector current source **29** are summarized in Table 1 for a single sensitive zone according to the invention; in implementations of the second type, any of the six possible connections for a sensing circuitry (**18** or **18'**) or a current source (**29** or **29'**) may be independently made in the aforesaid manner to any of the plural sensitive zones in volumeter assembly **80.** As with volumeter assemblies comprising a single sensitive zone, some such connections to volumeter assemblies **80** comprising multiple sensitive zones are preferable to others. Generally, those connection modes are less preferable which require either sensing or passage of effector current between any electrode pair including more than one sensitive zone. Multiple sensing circuitry **18** or **18'** (or effector current sources **29** or **29'**) may also be used, to provide multiple simultaneous connections to various combinations of electrodes according to desired operational properties.

In the second illustrative apparatus shown in FIG. 16, volumeter assembly 80" is one of the volumeter assemblies having double sensitive zones in Embodiments 15 or 16, and inputs **18**_{**1**} and **18**_{**2**} of a first sensing circuitry **18**_{**A**} are operatively connected (via electrically conductive paths **72** and **87**) to field-amending elements **52'** and **86** thereof. By means of two-position, two pole switch **S**_{**2**}, field-amending elements **86** and **53'** of volumeter assembly **80"** may be operatively connected (via electrically conductive paths **87** and **73**) to either inputs **18**_{**1**} and **18**_{**2**} of a second sensing circuitry **18**_{**B**} or outputs **29**_{**1**} and **29**_{**2**} of effector source **29**.

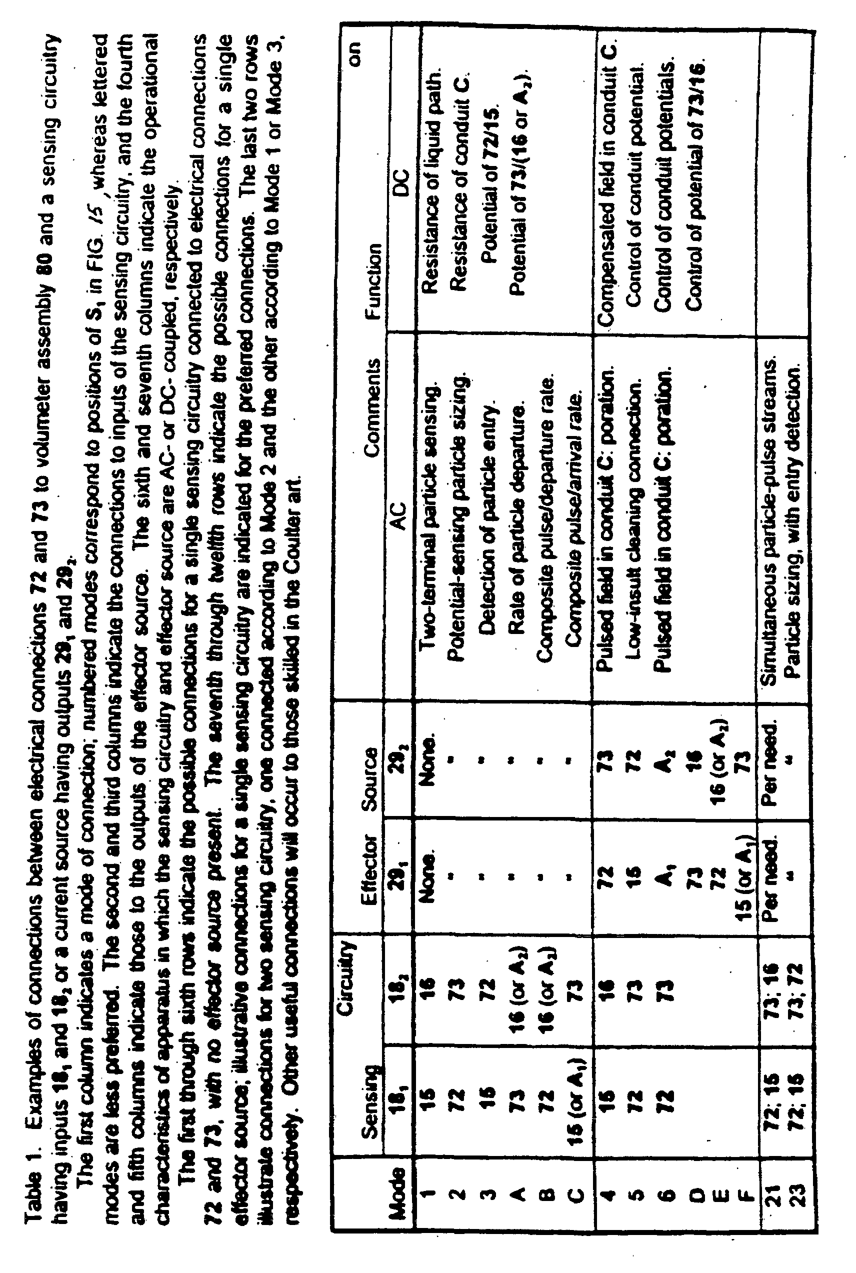

### EMBODIMENT 17

In the FIG. 16 apparatus, the Coulter wafer **W**_{**2**} surrounding the second sensitive zone is thinner than **W**_{**1**}, say, L₁/D = 1.2 and L₂/D = 0.3. As would be expected from the poor electric-field development in such a short conduit, pulse amplitudes are reduced. If, however, the gain of second sensing circuitry **18**_{**B**} is appropriately adjusted to compensate for the reduced signal amplitude, so that comparable pulse amplitudes are provided by sensing circuitry **18**_{**A**} and **18**_{**B**}, the second sensitive zone of conduit **C** is somewhat more responsive to the spatial distribution of particle mass, viz., the pulse characteristics become more responsive to either length or cross-sectional area of the particles. Thus, taken together, two time-sequential pulse signals from the same particle can provide more than purely volumetric information, by which useful insight on particle shape may be obtained.

Such approaches are likely to provide new methods of particle characterization, valuable in both the scientific and commercial senses. Some forms of such approaches are taught for sequential discrete conduits in aforementioned U.S. Patent 3,793,587, but the fluidic and correlational complexity required to implement such apparatus has prevented practical development. Further, the prior-art approaches are based on making the diameter of the second discrete conduit different, preferably smaller, than that of the first conduit, with the disadvantageous effect of requiring different flow volumes through the two conduits and considerable complexity in the flow subsystems. The integrated tandem-conduit of the present invention solves many of the aforementioned implementational problems which have heretofore prevented the development and application of the desired apparatus and methods. Volumeter assemblies **80"** made according to Embodiment 15 can be designed in a wide variety of practical length-to-diameter ratios L/D for each functional Coulter conduit in conduit **C** and made by improved techniques known to those skilled in the art of making Coulter wafers.

### EMBODIMENT 18

In a second operative mode, volumeter assembly **80"** comprises Coulter wafers **W**_{**1**} and **W**_{**2**} having the same geometry, and switch **S**_{**2**} in FIG. 16 is in Position 2, whereby effector current source **29** replaces sensing circuitry **18**_{**B**} in the operative connection to field-amending elements **86** and **53'**. Current source **29** is operatively connected to an appropriate portion of sensing circuitry **18**_{**A**} as indicated in FIG. 16, e.g., via a correlation or timing circuit. Thus, a particle generating a pulse during its passage through the sensitive zone defined by the geometric conduit in **W**_{**1**} may be exposed to a particular field intensity in the sensitive zone defined by the geometric conduit in **W**_{**2**}. The activation signal from sensing circuitry **18**_{**A**} can be made contingent on a desired particle characteristic, for instance volume or opacity, as known in the art. The current waveform from effector source **29** may be, e.g., a pulse temporally short compared to the transit time of the particle through the **W**_{**2**} portion of conduit **C**. In this configuration of the FIG. 16 apparatus, it may be beneficial to make electrically conductive path **87** a ground reference, whether by a direct connection, a virtual connection, or other operative connection. An example of the latter is a high-grade capacitor of large value connected between electrically conductive path **87** and a reference ground.

In an alternative form of the present embodiment, current source **29** is made responsive to such activation signal, whereby the current through conduit **C** between field-amending elements **86** and **53'** is increased above the nominal excitation current in a desired manner, e.g., either in a step mode or in a continuous ramping mode. In this configuration of the FIG. 16 apparatus, it may be beneficial to make either or both field-amending element **86** and **W**_{**2**} axially longer than the preferred minimum, to provide a time delay, e.g., to permit transients to decay or to allow effector source **29** sufficient time to modify the field within the second sensitive zone.

Such forms of the new apparatus may be used to determine membrane breakdown or cell fragility as known in the biological-cell art. These approaches are important in many scientific areas related to biological problems of clinical interest, and some are discussed in aforementioned U.S. Patent No. 4,525,666. However, the aforementioned fluidic and correlational complexity required to implement the sequential discrete conduits in the prior-art apparatus has prevented practical development. The integrated tandem-conduit of the present invention solves many of the implementational problems which have heretofore prevented the development and application of the desired apparatus and methods.

Many other forms of apparatus comprising prior-art volumeter conduits are known. Numerous other combinations of sensing circuitry **18**, sources **29**, and electrical connections to field-amending elements within volumeter assemblies **80** adapted from those described in the related application will occur to those skilled in the Coulter art of sensing and characterizing particles. However, it is believed that the concepts of the invention are sufficiently defined, and their range of applicability sufficiently indicated, that their potential, versatility, and advantages to practical apparatus may be appreciated. Moreover, it is believed that the embodiments herein described will enable one skilled in the Coulter arts to design practicable apparatus incorporating the concepts of the invention.

None of the aforesaid prior-art apparatus comprise field-amending volumeter assembly **50'** and conduit **C** therein. Consequently, regardless of configurational similarity to prior-art apparatus, apparatus of the invention offers numerous significant functional and commercial advantages, as described in the related application. Although volumeter assembly **50'** may resemble ones described in U.S. Patent Nos. 3,924,180 and 4,438,390, it is distinguished from such prior art due to the unique functional characteristics provided by conduit **C**. Similarly, although in configuration the apparatus of FIGS. 14, 15, and 16 may variously resemble apparatus described in certain prior art, in comprising volumeter assembly **50'** it is distinguished from such prior art. Regardless of the particular configuration of any given prior-art apparatus, none offers the particular, significant, and broad advantages taught in the related application.

Uses of the numerous embodiments, and methods whereby they may be implemented, are only indicated in outline form, for two reasons. Firstly, one skilled in the art of using present Coulter apparatus will be able to apply the apparatus of the invention with minimal experimentation. Secondly, it is believed that some of the uses and methods to which apparatus of the invention may be adapted have yet to be realized, being for one or another reason beyond the capabilities of present apparatus.

In the above description, the advance which the invention represents will become apparent to those skilled in this art, and while theories are expressed as an aid to explanation, these are not intended to be limiting, irrespective of their degree of correctness.

As will be apparent from the preceding discussion and description of the several embodiments, the field-amending volumeter conduit of this invention differs from known prior-art volumeter conduits in several important distinctions. Firstly, the new volumeter conduit incorporates solid field-amending elements preferably less resistive than the particle-suspending liquid medium adjacent to, and fluidically continuous with, its functional Coulter conduit; thus, prior-art conduit structures having any similarly disposed insulative structure, gap for a liquid electrode in an insulative structure, or liquid-permeated porous medium are all distinguished against on basis of resistivity and consequent function. Secondly, the field-amending elements disclosed with reference to FIGS. 6-13 are indirectly coupled electrically to the excitation electrodes **15,16** through electrical contact with the suspending liquid and so require no operative connection to external apparatus in order to achieve their primary functions; thus, prior-art conduit structures incorporating similarly located metallic thin electrodes are distinguished against on basis of intended function and independence from accessory apparatus. Thirdly, the axial extents of the field-amending elements are minimally those establishing a desired level of isolation between the external electric fields in the suspending liquid and the internal ambit fields of the conduit sensitive zone; these elements preferably have axial extents at minimum equal to those of the effective ambit electric fields of the functional Coulter conduit, further distinguishing against prior-art conduit structures incorporating similarly located conductive electrodes or elements intentionally made thin in order to minimize their effect on the electric field. Fourthly, in the field-amending conduit the axial extent of the entry field-amending element may be selectively increased above the minimal value to enable development of quasi-laminar flow, thereby permitting independent optimization of the effects of the electric and hydrodynamic fields on particle pulsations and predictable limitation of the number of anomalous particle pulses; such structures are not recognized in the prior conduit art. Therefore, these field-amending elements of lesser resistivity are clearly distinguished from both similarly located insulating structures and electrodes of whatever form in the prior art. It will be obvious to those skilled in the art of particle analysis that the present invention affords many advantages, and offers many design options, not available with the traditional Coulter volumeter conduit. The resulting versatility promises to expand the particle-characterizing art, by enabling cost-effective approaches to particle characterization not practicable with the Coulter conduit.

In the above description, the advance which the invention represents will become apparent to those skilled in this art, and while theories are expressed as an aid to explanation, these are not intended to be limiting, irrespective of their degree of correctness.

## Claims

1. Apparatus for sensing and characterizing particles by the Coulter principle, said apparatus comprising: (a) a volumeter conduit through which a liquid suspension of particles to be sensed and characterized can be made to pass; (b) a liquid handling-system for causing said liquid suspension of particles to pass through said volumeter conduit; (c) a first electrical circuit for producing a nominal electrical excitation current through said volumeter conduit, said excitation current being effective to establish in the vicinity of said volumeter conduit an electric field having a particle-sensitive zone in which changes in said nominal electrical excitation current as produced by particles passing through said volumeter conduit simultaneously with said nominal current are measurable, and; (d) at least one second electrical circuit for monitoring the characteristics of said nominal electrical excitation current through said volumeter conduit to sense the characteristics of particles passing through said conduit, **characterized in that**
(i) said volumeter conduit is hydrodynamically smooth and formed in a solid member having an electrical resistivity which effectively varies along the conduit length to define a conduit having a delimited central region of high electrical resistivity, said delimited region being smoothly contiguous on its opposing boundaries to uninsulated distal regions of substantially lesser electrical resistivity, each of said uninsulated distal regions having a length, measured along the longitudinal axis of the conduit, greater than approximately 0.75 times the diameter of the conduit portion through said delimited central region; and
(ii) said uninsulated distal regions independently function (1) to shape said electric field so as to substantially confine said particle-sensitive zone within the physical boundaries of said volumeter conduit; (2) to enable development of quasi-laminar flow through said sensitive zone so as to increase the proportion of particles per second transiting substantially homogeneous areas of the sensitive zone; and (3) to prevent particles that have already passed through said conduit and are on recirculating trajectories from re-entering said particle-sensitive zone.

2. The apparatus as defined by claim 1 **characterized in that** said solid member is a three-element structure composed of a layer of material having high electrical resistivity disposed between, and contiguous with, a pair of layers of material of lesser resistivity, and **in that** said conduit is formed by through-holes respectively formed in each of said layers, said through-holes being of the same size and shape and being fluidically aligned to form a hydrodynamically continuous and smooth conduit passing through said three-element structure.

3. The apparatus as defined by claim 1 **characterized in that** said solid member comprises an intrinsic semiconductor wafer which is suitably doped with an electrically active impurity to provide said delimited central region of high electrical resistivity which is smoothly contiguous on its opposing boundaries to uninsulated distal regions of substantially lesser electrical resistivity.

4. The apparatus as defined by claim 1 **characterized in that** said solid member comprises a unitary assembly comprising three complementary and contiguous ceramic elements, the center ceramic element being substantially pure and the outer ceramic elements being either a conductive ceramic or a ceramic infiltrated with a metallic material to enhance the conductivity thereof, and **in that** said conduit is formed by through-holes respectively formed in each of said ceramic elements, said through-holes being of the same size and shape and being fluidically aligned to form said hydrodynamically smooth conduit.

5. The apparatus as defined by claim 1 **characterized in that** said solid member comprises a unitary assembly comprising three complementary and contiguous elements, the center element being made of a substantially pure ceramic and the outer elements being made of a metallic material, and **in that** said conduit is formed by through-holes respectively formed in each of said elements, said through-holes being of the same size and shape and being fluidically aligned to form said hydrodynamically smooth conduit.

6. The apparatus as defined by claim 1 **characterized in that** said volumeter conduit is defined by (a) a through-hole formed in a wafer of dielectric material, and (b) central openings respectively formed in a pair of electrically-conductive collars, said central openings and said through-hole being of identical size and shape, said collars being disposed on opposite sides of said wafer so that their respective openings and said through-hole collectively form a hydrodynamically smooth conduit.

7. The apparatus as defined by claim 6 **characterized in that** said volumeter conduit has a circular cross-section, and **in that** each of said collars is circular in shape and has a diameter approximately 1.5 to 10 times the diameter of said volumeter conduit.

8. The apparatus as defined by claim 6 **characterized in that** each of said collars has a thickness approximately 1 to 10 times the thickness of said wafer.

9. The apparatus as defined by claim 1 further **characterized in that** a third electrical circuit functioning to produce an effector current through said conduit which is effective to establish in the vicinity of said conduit an electric field having a field intensity different from that established in said particle-sensitive zone by said first electrical circuit.

10. The apparatus as defined by claim 9 **characterized in that** said third electrical circuit is connected either (a) between said uninsulated distal regions, or (b) between one of said uninsulated distal regions and an electrode in electrical contact with said liquid suspension.

11. The apparatus as defined by claim 1 wherein the electrical resistivity of said solid member effectively varies along the conduit length to define a conduit having a plurality of delimited regions of high electrical resistivity, each said delimited region defining a particle-sensitive zone and being smoothly contiguous on its opposing boundaries to uninsulated regions of substantially lesser electrical resistivity.

12. A particle-sensing volumeter assembly adapted for use in an apparatus which characterizes particles by the Coulter principle, said volumeter assembly comprising a solid member having a wall defining a hydrodynamically smooth conduit through which particles to be characterized can be made to pass simultaneously with the passage of an electrical current through said conduit, said electrical current being effective to produce in the vicinity of said conduit an electric field having a particle-sensitive zone through which the passage of said particles is detectable, **characterized in that** said wall has an electrical resistivity which varies in an axisymmetric manner along the conduit length to define a delimited first region of high electrical resistivity contiguous on at least one of its opposing boundaries to an uninsulated distal region of substantial lesser electrical resistivity, said uninsulated distal region having a length measured along the longitudinal axis of said conduit greater than approximately 0.75 times the diameter of the conduit portion through said delimited central region and functioning to independently (i) shape said electric field so as to substantially confine at least a portion of said particle-sensitive zone within the physical boundaries of the conduit; and (ii) either enable development of quasi-laminar flow through said particle-sensitive zone so as increase the proportion of particles per second transiting substantially homogeneous areas of said particle-sensitive zone, and/or prevent particles that have already passed through said conduit and are on recirculating trajectories from re-entering said particle-sensitive zone.

13. The apparatus as defined by claim 12 wherein said conduit is **characterized by** (a) a through-hole formed in a wafer of dielectric material, and (b) a central opening formed in an electrically-conductive collar, said central opening and said through-hole being of identical size and shape, said collar being disposed on said wafer so that its respective opening and said through-hole collectively form a hydrodynamically smooth conduit.

14. A method for sensing and characterizing particles by the Coulter principle. said method comprising the steps of:
(a) passing a liquid suspension of particles to be sensed and characterized through a volumeter conduit formed in a solid material; and
(b) producing a nominal electrical excitation current through said volumeter conduit and an electric field in the vicinity of said conduit, said electric field having a particle-sensitive zone in which changes in said nominal electrical excitation current as produced by particles passing through said volumeter conduit simultaneously with said nominal current are measurable; **characterized in that**:
said solid material has an electrical resistivity which effectively varies along the conduit length to define a conduit having a delimited central region of high electrical resistivity which is smoothly contiguous on at least one of its opposing boundaries to an uninsulated distal region of substantially lesser electrical resistivity, said distal region having a length measured along the longitudinal axis of said conduit greater than approximately 0.75 times the diameter of the conduit portion through said delimited central region and functioning (i) to shape said electric field so as to substantially confine at least a portion of said particle-sensitive zone within the physical boundaries of the conduit; and (ii) to enable development of quasi-laminar flow through said particle-sensitive zone so as increase the proportion of particles per second transiting substantially homogeneous areas of said particle-sensitive zone, and/or prevent particles that have already passed through said conduit and are on recirculating trajectories from re-entering said particle-sensitive zone.

## Patentansprüche

1. Vorrichtung zum Fühlen bzw. Abfühlen und Charakterisieren bzw. Kennzeichnen von Partikeln bzw. Teilchen durch das Coulter-Prinzip, wobei die Vorrichtung aufweist: (a) eine Volumen- bzw. Mengenmessleitung, durch welche eine flüssige Suspension von abzufühlenden und zu kennzeichnenden Partikeln hindurchgelassen bzw. -geschickt werden kann; (b) ein Flüssigkeitshandhabungssystem, um die flüssige Suspension von Partikeln dazu zu veranlassen, durch die Volumenmessleitung zu verlaufen; (c) eine erste elektrische Schaltung bzw. Schaltkreis zum Erzeugen eines nominellen elektrischen Erregerstroms bzw. Erreger-Nennstroms durch die Volumenmessleitung, wobei der Erregerstrom effektiv ist, um in der Nähe bzw. Nachbarschaft der Volumenmessleitung ein elektrisches Feld mit einer partikelsensitiven bzw. ―empfindlichen Zone aufzubauen, in welcher Änderungen in dem nominellen elektrischen Erregerstrom, wie durch Partikel erzeugt, die durch die Volumenmessleitung gleichzeitig mit dem Nennstrom verlaufen, gemessen werden können, und; (d) wenigstens eine zweite elektrische Schaltung bzw. Schaltkreis zum Überwachen der Charakteristika bzw. Eigenschaften des nominellen elektrischen Erregerstroms durch die Volumenmessleitung, um die Eigenschaften von Partikeln abzufühlen, die durch die Leitung gehen, **dadurch gekennzeichnet, dass**
(i) die Volumenmessleitung hydrodynamisch glatt bzw. gleichmäßig und in einem Feststoff- bzw. Festkörperelement mit einem spezifischen elektrischen Widerstand gebildet ist, der sich effektiv entlang der Leitungslänge ändert, um eine Leitung mit einer begrenzten mittleren Region eines hohen spezifischen elektrischen Widerstands zu definieren, wobei die begrenzte Region an ihren gegenüberliegenden bzw. entgegengesetzten Begrenzungen an unisolierte, distale Regionen eines wesentlich geringeren spezifischen elektrischen Widerstands glatt bzw. gleichmäßig angrenzend ist, wobei jede der unisolierten, distalen Regionen eine Länge, die entlang der Längsachse der Leitung gemessen ist, größer als annähernd 0,75 mal der Durchmesser des Leitungsbereichs durch die begrenzte mittlere Region aufweist; und
(ii) die unisolierten, distalen Regionen unabhängig funktionieren, um (1) das elektrische Feld so zu formen, dass es die partikelsensitive Zone innerhalb der physikalischen bzw. körperlichen Begrenzungen der Volumenmessleitung im Wesentlichen begrenzt; (2) eine Entwicklung einer quasilaminaren Strömung durch die sensitive Zone zu ermöglichen, um die Proportion bzw. den Anteil von Partikeln pro Sekunde zu erhöhen, die in im Wesentlichen homogene Bereiche der sensitiven Zone übergehen; und (3) Partikel, die bereits durch die Leitung hindurch gegangen sind und sich an umlaufenden Trajektorien bzw. Bahnen befinden, am Wiedereintreten in die partikelsensitive Zone zu hindern.

2. Vorrichtung, wie durch Anspruch 1 definiert, **dadurch gekennzeichnet, dass** das Festkörperelement eine Dreielementstruktur ist, die aus einer Schicht aus Material mit einem hohen spezifischen elektrischen Widerstand besteht, die zwischen einem Paar von Schichten aus Material eines geringeren spezifischen Widerstands und an dieses Paar von Schichten angrenzend angeordnet ist, und dass die Leitung durch Durchgangslöcher gebildet ist, die jeweils in jeder der Schichten gebildet sind, wobei die Durchgangslöcher die gleiche Größe und Gestalt aufweisen und fluidisch bzw. strömungsmechanisch ausgerichtet sind, um eine hydrodynamisch kontinuierliche und glatte Leitung zu bilden, welche durch die Dreielementstruktur verläuft.

3. Vorrichtung, wie durch Anspruch 1 definiert, **dadurch gekennzeichnet, dass** das Festkörperelement einen Intrinsic-Halbleiter-Wafer aufweist, welcher in geeigneter Weise mit einer elektrisch aktiven Verunreinigung dotiert ist, um die begrenzte mittlere Region eines hohen spezifischen elektrischen Widerstands zu ergeben, welche an ihren gegenüberliegenden bzw. entgegengesetzten Begrenzungen an unisolierte, distale Regionen eines wesentlich geringeren spezifischen elektrischen Widerstands gleichmäßig angrenzend ist.

4. Vorrichtung, wie durch Anspruch 1 definiert, **dadurch gekennzeichnet, dass** das Festkörperelement eine unitäre Anordnung bzw. Baugruppe aufweist, welche drei komplementäre und aneinander angrenzende, keramische Elemente aufweist, wobei das mittlere keramische Element im Wesentlichen rein ist und die äußeren keramischen Elemente entweder eine leitfähige Keramik oder eine Keramik sind, die mit einem metallischen Material infiltriert ist, um deren Leitfähigkeit zu steigern, und dass die Leitung durch Durchgangslöcher gebildet ist, die jeweils in jedem der keramischen Elemente gebildet sind, wobei die Durchgangslöcher die gleiche Größe und Gestalt aufweisen und fluidisch bzw. strömungsmechanisch ausgerichtet sind, um die hydrodynamisch glatte Leitung zu bilden.

5. Vorrichtung, wie durch Anspruch 1 definiert, **dadurch gekennzeichnet, dass** das Festkörperelement eine unitäre Anordnung bzw. Baugruppe aufweist, welche drei komplementäre und angrenzende Elemente aufweist, wobei das mittlere Element aus einer im Wesentlichen reinen Keramik und die äußeren Elemente aus einem metallischen Material hergestellt sind, und dass die Leitung durch Durchgangslöcher gebildet ist, die jeweils in jedem der Elemente gebildet sind, wobei die Durchgangslöcher die gleiche Größe und Gestalt aufweisen und fluidisch bzw. strömungsmechanisch ausgerichtet sind, um die hydrodynamisch glatte Leitung zu bilden.

6. Vorrichtung, wie durch Anspruch 1 definiert, **dadurch gekennzeichnet, dass** die Volumenmessleitung durch (a) ein Durchgangsloch, das in einem Wafer aus dielektrischem Material gebildet ist, und (b) mittlere Öffnungen definiert ist, die jeweils in einem Paar von elektrisch leitfähigen Krägen bzw. Bunden gebildet sind, wobei die mittleren Öffnungen und das Durchgangsloch identische Größe und Gestalt aufweisen und wobei die Krägen bzw. Bunde an entgegengesetzten bzw. gegenüberliegenden Seiten des Wafers angeordnet sind, so dass ihre jeweiligen Öffnungen und das Durchgangsloch gemeinsam eine hydrodynamisch glatte Leitung bilden.

7. Vorrichtung, wie durch Anspruch 6 definiert, **dadurch gekennzeichnet, dass** die Volumenmessleitung einen kreisförmigen Querschnitt aufweist und dass jeder der Krägen in der Gestalt bzw. Form kreisförmig ist und einen Durchmesser von annähernd 1,5 bis 10 mal dem Durchmesser der Volumenmessleitung aufweist.

8. Vorrichtung, wie durch Anspruch 6 definiert, **dadurch gekennzeichnet, dass** jeder der Krägen eine Dicke von annähernd 1 bis 10 mal die Dicke des Wafers aufweist.

9. Vorrichtung, wie durch Anspruch 1 definiert, femer **dadurch gekennzeichnet, dass** eine dritte elektrische Schaltung bzw. Schaltkreis funktioniert, um einen Effektorstrom durch die Leitung zu erzeugen, der effektiv ist, um in der Nähe bzw. Nachbarschaft der Leitung ein elektrisches Feld mit einer Feldstärke aufzubauen, die von derjenigen unterschiedlich ist, die in der partikelsensitiven Zone durch den ersten elektrischen Schaltkreis aufgebaut ist.

10. Vorrichtung, wie durch Anspruch 9 definiert, **dadurch gekennzeichnet, dass** der dritte elektrische Schaltkreis entweder (a) zwischen den unisolierten, distalen Regionen oder (b) zwischen einer der unisolierten, distalen Regionen und einer Elektrode in elektrischem Kontakt mit der flüssigen Suspension verbunden bzw. leitend verbunden ist.

11. Vorrichtung, wie durch Anspruch 1 definiert, bei der der spezifische elektrische Widerstand des Festkörperelements entlang der Leitungslänge effektiv variiert, um eine Leitung mit einer Mehrzahl von begrenzten Regionen eines hohen spezifischen elektrischen Widerstands zu definieren, wobei jede begrenzte Region eine partikelsensitive Zone definiert und an ihren gegenüberliegenden bzw. entgegengesetzten Begrenzungen an unisolierte Regionen eines wesentlich geringeren spezifischen elektrischen Widerstands gleichmäßig angrenzend ist.

12. Partikelfühlende bzw. ―abfühlende Volumen- bzw. Mengenmessanordnung, die zur Verwendung in einer Vorrichtung befähigt ist, welche Partikel durch das Coulter-Prinzip charakterisiert bzw. kennzeichnet, wobei die Volumenmessanordnung ein Feststoff- bzw. Festkörperelement mit einer Wand aufweist, welche eine hydrodynamisch glatte bzw. gleichmäßige Leitung definiert, durch welche Partikel, die zu kennzeichnen sind, gleichzeitig mit dem Durchgang eines elektrischen Stroms durch die Leitung hindurchgelassen werden können, wobei der elektrische Strom effektiv ist, um in der Nachbarschaft bzw. Nähe der Leitung ein elektrisches Feld mit einer partikelsensitiven bzw. ―empfindlichen Zone zu erzeugen, durch welche der Durchgang der Partikel feststellbar ist, **dadurch gekennzeichnet, dass** die Wand einen spezifischen elektrischen Widerstand aufweist, welcher in einer axialsymmetrischen Art und Weise entlang der Leitungslänge variiert, um eine begrenzte erste Region eines hohen spezifischen elektrischen Widerstands angrenzend an wenigstens einer ihrer gegenüberliegenden bzw. entgegengesetzten Begrenzungen an eine unisolierte, distale Region eines wesentlich geringeren spezifischen elektrischen Widerstands zu definieren, wobei die unisolierte, distale Region eine Länge, die entlang der Längsachse der Leitung gemessen ist, größer als annähernd 0,75 mal der Durchmesser des Leitungsbereichs durch die begrenzte mittlere Region aufweist und funktioniert, um unabhängig (i) das elektrische Feld so zu formen, dass es wenigstens einen Bereich der partikelsensitiven Zone innerhalb der physikalischen bzw. körperlichen Begrenzungen der Leitung im Wesentlichen begrenzt, und (ii) entweder eine Entwicklung einer quasilaminaren Strömung durch die partikelsensitive Zone zu ermöglichen, um die Proportion bzw. Anteil von Partikeln pro Sekunde zu erhöhen, welche in im Wesentlichen homogene Bereiche der partikelsensitiven Zone übergehen, und/oder Partikel, welche bereits durch die Leitung hindurch gegangen sind und sich an umlaufenden Trajektorien bzw. Bahnen befinden, am Wiedereintreten in die partikelsensitive Zone zu hindern.

13. Vorrichtung, wie durch Anspruch 12 definiert, bei der die Leitung **gekennzeichnet ist durch** (a) ein Durchgangsloch, das in einem Wafer aus dielektrischem Material gebildet ist, und (b) eine mittlere Öffnung, die in einem elektrisch leitfähigen Kragen bzw. Bund gebildet ist, wobei die mittlere Öffnung und das Durchgangsloch identische Größe und Gestalt aufweisen und wobei der Kragen bzw. Bund an dem Wafer so angeordnet ist, dass die entsprechende Öffnung des Kragens und das Durchgangsloch gemeinsam eine hydrodynamisch glatte Leitung bilden.

14. Verfahren zum Fühlen bzw. Abfühlen und Charakterisieren bzw. Kennzeichnen von Partikeln bzw. Teilchen durch das Coulter-Prinzip, wobei das Verfahren die Schritte aufweist:
(a) Hindurchlassen bzw. -schicken einer flüssigen Suspension von abzufühlenden und zu kennzeichnenden Partikeln durch eine Volumen- bzw. Mengenmessleitung, die in einem festen Material bzw. Stoff gebildet ist; und
(b) Erzeugen eines nominellen elektrischen Erregerstroms bzw. Erreger-Nennstroms durch die Volumenmessleitung und eines elektrischen Feldes in der Nähe bzw. Nachbarschaft der Leitung, wobei das elektrische Feld eine partikelsensitive bzw. -empfindliche Zone aufweist, in der Änderungen in dem nominellen elektrischen Erregerstrom, wie durch Partikel erzeugt, welche durch die Volumenmessleitung gleichzeitig mit dem Nennstrom verlaufen, gemessen werden können; **dadurch gekennzeichnet, dass**
das feste Material einen spezifischen elektrischen Widerstand aufweist, welcher entlang der Leitungslänge effektiv variiert, um eine Leitung mit einer begrenzten mittleren Region eines hohen spezifischen elektrischen Widerstands zu definieren, welche an wenigstens einer ihrer entgegengesetzten bzw. gegenüberliegenden Begrenzungen an eine unisolierte, distale Region eines wesentlich geringeren spezifischen elektrischen Widerstands glatt bzw. gleichmäßig angrenzend ist, wobei die distale Region eine Länge, die entlang der Längsachse der Leitung gemessen ist, größer als annähernd 0,75 mal der Durchmesser des Leitungsbereichs durch die begrenzte, mittlere Region aufweist und funktioniert, um (i) das elektrische Feld so zu formen, dass es wenigstens einen Bereich der partikelsensitiven Zone innerhalb der physikalischen bzw. körperlichen Begrenzungen der Leitung im Wesentlichen begrenzt, und (ii) eine Entwicklung einer quasilaminaren Strömung durch die partikelsensitive Zone zu ermöglichen, um die Proportion bzw. Anteil von Partikeln pro Sekunde zu erhöhen, welche in im Wesentlichen homogene Bereiche der partikelsensitiven Zone übergehen, und/oder Partikel, welche bereits durch die Leitung hindurchgegangen sind und sich an umlaufenden Trajektorien bzw. Bahnen befinden, am Wiedereintreten in die partikelsensitive Zone zu hindern.

## Revendications

1. Dispositif de détection et de caractérisation de particules par le principe de Coulter, ledit dispositif comprenant: (a) un conduit débitmétrique à travers lequel une suspension liquide de particules à détecter et à caractériser peut être amenée à passer ; (b) un dispositif de conditionnement de liquide destiné à amener ladite suspension liquide de particules à passer à travers ledit conduit débitmétrique ; (c) un premier circuit électrique destiné à produire un courant d'excitation électrique nominal à travers ledit conduit débitmétrique, ledit courant d'excitation étant destiné à établir, à proximité dudit conduit débitmétrique, un champ électrique présentant une zone sensible aux particules dans laquelle des variations sur ledit courant d'excitation électrique nominal telles que produites par des particules passant à travers ledit conduit débitmétrique simultanément avec ledit courant nominal peuvent être mesurées ; et (d) au moins un deuxième circuit électrique destiné à surveiller les caractéristiques dudit courant d'excitation électrique nominal à travers ledit conduit débitmétrique afin de détecter les caractéristiques de particules passant à travers ledit conduit, **caractérisé en ce que**:
(i) ledit conduit débitmétrique est hydrodynamiquement lisse et formé dans un élément solide présentant une résistivité électrique qui varie effectivement suivant la longueur du conduit afin de définir un conduit présentant une zone centrale délimitée de résistivité électrique élevée, ladite zone délimitée étant régulièrement contiguë sur ses limites opposées à des zones distales non isolées de résistivité électrique relativement plus faible, chacune desdites zones distales non isolées présentant une longueur, mesurée suivant l'axe longitudinal du conduit, supérieure à approximativement 0,75 fois le diamètre de la partie de conduit à travers ladite zone centrale délimitée ; et
(ii) lesdites zones distales non isolées servent de manière indépendante (1) à former ledit champ électrique de manière à confiner principalement ladite zone sensible aux particules à l'intérieur des limites physiques dudit conduit débitmétrique ; (2) à permettre le développement d'un écoulement quasi-laminaire à travers ladite zone sensible de manière à augmenter la proportion de particules par seconde qui transitent dans des zones relativement homogènes de la zone sensible ; et (3) à empêcher les particules qui sont déjà passées à travers ledit conduit et sont sur des trajectoires de recirculation, d'entrer de nouveau dans ladite zone sensible aux particules.

2. Dispositif selon la revendication 1, **caractérisé en ce que** ledit élément solide est une structure à trois éléments composée d'une couche de matériau présentant une résistivité électrique élevée disposée entre une paire de couches de matériau de résistivité plus faible et contiguë avec ces dernières, et **en ce que** ledit conduit est formé par des orifices traversants formés respectivement dans chacune desdites couches, lesdits orifices traversants étant de mêmes taille et forme et étant fluidiquement alignés afin de former un conduit hydrodynamiquement continu et lisse passant à travers ladite structure à trois éléments.

3. Dispositif selon la revendication 1, **caractérisé en ce que** ledit élément solide comprend une pastille semi-conductrice intrinsèque qui est dopée de manière appropriée avec une impureté électriquement active afin de former ladite zone centrale délimitée de résistivité électrique élevée qui est régulièrement contiguë sur ses limites opposées à des zones distales non isolées de résistivité électrique relativement plus faible.

4. Dispositif selon la revendication 1, **caractérisé en ce que** ledit élément solide comprend un ensemble unitaire comprenant trois éléments céramiques complémentaires et contigus, l'élément céramique central étant relativement pur et les éléments céramiques externes étant soit à base de céramique conductrice soit à base de céramique dans laquelle un matériau métallique est infiltré afin d'améliorer sa conductivité, et **en ce que** ledit conduit est formé par des orifices traversants formés respectivement dans chacun desdits éléments céramiques, lesdits orifices traversants étant de mêmes taille et forme et étant fluidiquement alignés afin de former ledit conduit hydrodynamiquement lisse.

5. Dispositif selon la revendication 1, **caractérisé en ce que** ledit élément solide comprend un ensemble unitaire comprenant trois éléments complémentaires et contigus, l'élément central étant réalisé en une céramique relativement pure et les éléments externes étant réalisés en un matériau métallique, et **en ce que** ledit conduit est formé par des orifices traversants formés respectivement dans chacun desdits éléments, lesdits orifices traversants étant de mêmes taille et forme et étant fluidiquement alignés afin de former ledit conduit hydrodynamiquement lisse.

6. Dispositif selon la revendication 1, **caractérisé en ce que** ledit conduit débitmétrique est défini par (a) un orifice traversant formé sur une pastille de matériau diélectrique, et (b) les ouvertures centrales formées respectivement dans une paire de bagues électriquement conductrices, lesdites ouvertures centrales et ledit orifice traversant étant de taille et forme identiques, lesdites bagues étant disposées sur des faces opposées de ladite pastille de telle sorte que leurs ouvertures respectives et ledit orifice traversant forment collectivement un conduit hydrodynamiquement lisse.

7. Dispositif selon la revendication 6, **caractérisé en ce que** ledit conduit débitmétrique présente une section transversale circulaire et **en ce que** chacune desdites bagues est de forme circulaire et présente un diamètre approximativement de 1,5 à 10 fois le diamètre dudit conduit débitmétrique.

8. Dispositif selon la revendication 6, **caractérisé en ce que** chacune desdites bagues présente une épaisseur approximativement de 1 à 10 fois l'épaisseur de ladite pastille.

9. Dispositif selon la revendication 1, **caractérisé, en outre, en ce qu'**un troisième circuit électrique servant à produire un courant d'activation à travers ledit conduit qui est opérationnel afin d'établir, à proximité dudit conduit, un champ électrique présentant une intensité de champ différente de celle du champ établi dans ladite zone sensible aux particules par ledit premier circuit électrique.

10. Dispositif selon la revendication 9, **caractérisé en ce que** ledit troisième circuit électrique est relié soit (a) entre lesdites zones distales non isolées, soit (b) entre l'une desdites zones distales non isolées et une électrode en contact électrique avec ladite suspension liquide.

11. Dispositif selon la revendication 1, dans lequel ladite résistivité électrique dudit élément solide varie effectivement suivant la longueur du conduit afin de définir un conduit présentant une pluralité de zones délimitées de résistivité électrique élevée, chaque dite zone délimitée définissant une zone sensible aux particules et étant régulièrement contiguë sur ses limites opposées à des zones non isolées de résistivité électrique relativement plus faible.

12. Ensemble débitmétrique de détection de particules adapté à une utilisation dans un dispositif qui caractérise des particules par le principe de Coulter, ledit ensemble débitmétrique comprenant un élément solide présentant une paroi définissant un conduit hydrodynamiquement lisse à travers lequel des particules à caractériser peuvent être amenées à passer simultanément avec le passage d'un courant électrique à travers ledit conduit, ledit courant électrique servant à produire, à proximité dudit conduit, un champ électrique présentant une zone sensible aux particules à travers laquelle le passage desdites particules peut être détecté, **caractérisé en ce que** ladite paroi présente une résistivité électrique qui varie d'une manière axisymétrique suivant la longueur du conduit afin de définir une première zone délimitée de résistivité électrique élevée contiguë sur au moins l'une de ses limites opposées à une zone distale non isolée de résistivité électrique relativement plus faible, ladite zone distale non isolée présentant une longueur mesurée suivant l'axe longitudinal dudit conduit supérieure à approximativement 0,75 fois le diamètre de la partie de conduit à travers ladite zone centrale délimitée et servant, de manière indépendante, (i) à former ledit champ électrique de manière à relativement confiner au moins une partie de ladite zone sensible aux particules à l'intérieur des limites physiques du conduit; et (ii) soit à permettre le développement d'un flux quasi-laminaire à travers ladite zone sensible aux particules de manière à augmenter la proportion de particules par seconde transitant dans des zones relativement homogènes de ladite zone sensible aux particules, et/soit à empêcher à des particules qui sont déjà passées à travers ledit conduit et sont sur des trajectoires de recirculation d'entrer de nouveau dans ladite zone sensible aux particules.

13. Dispositif selon la revendication 12, dans lequel ledit conduit est **caractérisé par** (a) un orifice traversant formé dans une pastille de matériau diélectrique, et (b) une ouverture centrale formée dans une bague électriquement conductrice, ladite ouverture centrale et ledit orifice traversant étant de taille et forme identiques, ladite bague étant disposée sur ladite pastille de telle sorte que son ouverture respective et ledit orifice traversant forment collectivement un conduit hydrodynamiquement lisse.

14. Procédé de détection et de caractérisation de particules par le principe de Coulter, ledit procédé comprenant les étapes de:
(a) mise en circulation d'une suspension liquide de particules à détecter et à caractériser à travers un conduit débitmétrique formé dans un matériau solide ; et
(b) production d'un courant d'excitation électrique nominal à travers ledit conduit débitmétrique et d'un champ électrique à proximité dudit conduit débitmétrique, ledit champ électrique présentant une zone sensible aux particules dans laquelle des variations sur ledit courant d'excitation électrique nominal telles que produites par les particules passant à travers ledit conduit débitmétrique de manière simultanée avec ledit courant nominal peuvent être mesurées ; **caractérisé en ce que**:
ledit matériau solide présente une résistivité électrique qui varie effectivement suivant la longueur de conduit afin de définir un conduit présentant une zone centrale délimitée de résistivité électrique élevée qui est régulièrement contiguë sur au moins l'une de ses limites opposées à une zone distale non isolée de résistivité électrique relativement plus faible, ladite zone distale présentant une longueur mesurée suivant l'axe longitudinal dudit conduit qui est supérieure à approximativement 0,75 fois le diamètre de la partie de conduit à travers ladite zone centrale délimité et servant (i) à former ledit champ électrique de manière à relativement confiner au moins une partie de ladite zone sensible aux particules à l'intérieur des limites physiques du conduit ; et (ii) à permettre le développement d'un écoulement quasi-laminaire à travers ladite zone sensible aux particules de manière à augmenter la proportion de particules par seconde transitant par des zones relativement homogènes de ladite zone sensible aux particules, et/ou à empêcher à des particules qui sont déjà passées à travers ledit conduit et sont des trajectoires de recirculation d'entrer de nouveau dans ladite zone sensible aux particules.
